(19) Europäisches Patentamt
European Patent Office
Office européen des brevets

(11) EP 4 318 042 A1

(12) EUROPEAN PATENT APPLICATION
published in accordance with Art. 153(4) EPC

(43) Date of publication:
**07.02.2024 Bulletin 2024/06**

(21) Application number: **22779539.0**

(22) Date of filing: **08.02.2022**

(51) International Patent Classification (IPC):
***G01S 17/34*** (2020.01) ***G01S 17/931*** (2020.01)

(52) Cooperative Patent Classification (CPC):
**G01S 17/34; G01S 17/931**

(86) International application number:
**PCT/JP2022/004779**

(87) International publication number:
**WO 2022/209310 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057409**

(71) Applicant: **Panasonic Intellectual Property Management Co., Ltd.**
**Osaka 571-0057 (JP)**

(72) Inventors:
- **TAKAGI Hiroyuki**
  **Kadoma-shi, Osaka 571-0057 (JP)**
- **INADA Yasuhisa**
  **Kadoma-shi, Osaka 571-0057 (JP)**
- **KABETANI Yasuhiro**
  **Kadoma-shi, Osaka 571-0057 (JP)**
- **KATO Yumiko**
  **Kadoma-shi, Osaka 571-0057 (JP)**
- **NARUMI Kenji**
  **Kadoma-shi, Osaka 571-0057 (JP)**
- **KIKUCHI Kohei**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

# (54) MEASUREMENT DEVICE AND PROGRAM

(57) A measuring device includes: a light source capable of emitting light for irradiating an object and changing a frequency of the light; an interference optical system that separates the light into reference light and irradiation light, and generates interference light by causing interference between the reference light and reflected light generated by reflection of the irradiation light on the object; a photodetector that receives the interference light and outputs a signal corresponding to an intensity of the interference light; and a processing circuit that controls the light source and generates and outputs data on a distance and/or velocity of the object based on the signal outputted from the photodetector, in which the processing circuit causes the light source to emit light having a frequency that changes with time within a first frequency range in a first mode, and causes the light source to emit light having a frequency that changes with time within a second frequency range different from the first frequency range in the second mode.

FIG. 6A

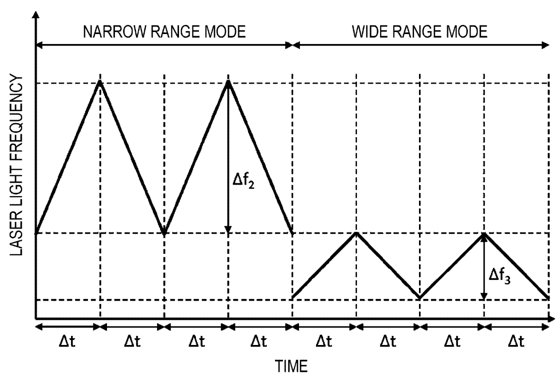


EP 4 318 042 A1

## Description

### Technical Field

The present disclosure relates to a measuring device and a program.

### Background Art

There has heretofore been a light detection and ranging (LiDAR) technology for generating measurement data on the distance and/or velocity of an object by irradiating the object with light and detecting reflected light from the object. A typical example of a measuring device using the LiDAR technology includes a light source, a photodetector, and a processing circuit. The light source emits light for irradiating the object. The photodetector detects a reflected wave from the object and outputs a signal corresponding to a time delay of the reflected wave. The processing circuit acquires data on the distance and velocity of the object using a frequency modulated continuous wave (FMCW) technology, for example, based on the signal outputted from the photodetector. Patent Literatures 1 to 4 disclose examples of the measuring device using the FMCW technology.

### Citation List

#### Patent Literature

PTL 1: U.S. Patent Application Publication No. 2019/0310372
PTL 2: Japanese Unexamined Patent Application Publication No. 2002-71792
PTL 3: Japanese Unexamined Patent Application Publication No. 8-5733
PTL 4: Japanese Unexamined Patent Application Publication (Translation of PCT Application) No. 2013-321508

#### Non Patent Literature

NPL 1: Christopher V. Poulton, et al., "Frequency-modulated Continuous-wave LIDAR Module in Silicon Photonics", OFC2016, W4E.3, (2016).

### Summary of Invention

#### Technical Problem

The present disclosure provides a measuring device capable of acquiring measurement data on an object by appropriately changing a ranging range.

#### Solution to Problem

A measuring device according to an aspect of the present disclosure includes: a light source capable of emitting light for irradiating an object and changing a frequency of the light; an interference optical system that separates the light into reference light and irradiation light, and generates interference light by causing interference between the reference light and reflected light generated by reflection of the irradiation light on the object; a photodetector that receives the interference light and outputs a signal corresponding to an intensity of the interference light; and a processing circuit that controls the light source and generates and outputs data on a distance and/or velocity of the object based on the signal outputted from the photodetector, in which the processing circuit operates in a first mode and a second mode, causes the light source to emit light having a frequency that changes with time within a first frequency range in the first mode, and causes the light source to emit light having a frequency that changes with time within a second frequency range different from the first frequency range in the second mode, an absolute value of a time rate of change in frequency in the first frequency range is different from an absolute value of a time rate of change in frequency in the second frequency range, a center frequency of the first frequency range is different from a center frequency of the second frequency range, and a lower limit of the first frequency range is different from a lower limit of the second frequency range.

Comprehensive or specific aspects of the present disclosure may be implemented using a system, device, method, integrated circuit, computer program, a recording medium such as a computer-readable recording disk, or any given combination of the system, device, method, integrated circuit, computer program, recording medium. The computer-readable recording medium may include a non-volatile recording medium such as a compact disc-read only memory (CD-ROM), for example. The device may include one or more devices. When the device includes two or more devices, the two or more devices may be arranged in one equipment, or may be separately arranged in two or more separate pieces of equipment. As used herein and in the claims, the term "device" can mean not only one device, but also a system including a plurality of devices. Such a plurality of devices included in the "system" may also include a device installed in a remote location away from other devices and connected through a communication network.

#### Advantageous Effects of Invention

According to the technology of the present disclosure, it is possible to realize a measuring device capable of acquiring measurement data on an object by appropriately changing a ranging range.

### Brief Description of Drawings

[Fig. 1] Fig. 1 is a block diagram schematically illustrating a configuration of a measuring device according to an exemplary embodiment of the present disclosure.
[Fig. 2A] Fig. 2A is a graph schematically illustrating time changes in reference light and reflected light with respect to frequency when an object is stationary.
[Fig. 2B] Fig. 2B is a graph schematically illustrating time changes in the reference light and the reflected light with respect to the frequency when the object approaches the measuring device.
[Fig. 3] Fig. 3 is a graph illustrating a relationship between a distance from the measuring device to the object and a beat frequency.
[Fig. 4] Fig. 4 is a graph schematically illustrating a relationship between an applied current value and the frequency of laser light in a distributed feedback laser diode.
[Fig. 5] Fig. 5 is a graph for explaining a correspondence relationship between the current value range and the frequency range in the graph illustrated in Fig. 4.
[Fig. 6A] Fig. 6A is a graph schematically illustrating a relationship between the frequency of the laser light and time in a narrow range mode and a wide range mode.
[Fig. 6B] Fig. 6B is a graph schematically illustrating a relationship between the intensity of the laser light and time in the narrow range mode and the wide range mode.
[Fig. 7A] Fig. 7A is a flowchart illustrating an example of operations performed by a processing circuit.
[Fig. 7B] Fig. 7B is a flowchart illustrating an example of an operation performed by the processing circuit in step S 101 illustrated in Fig. 7A.
[Fig. 7C] Fig. 7C is a flowchart illustrating an example of an operation performed by the processing circuit in step S 104 illustrated in Fig. 7A.
[Fig. 8] Fig. 8 is a perspective view schematically illustrating an example of a vehicle having the measuring device mounted on its front surface.
[Fig. 9A] Fig. 9A is a diagram schematically illustrating an example of emitting flashlight toward a target scene.
[Fig. 9B] Fig. 9B is a diagram schematically illustrating a relationship between beat signal strength and a measured distance in the example illustrated in Fig. 9A.
[Fig. 10A] Fig. 10A is a diagram schematically illustrating an example of emitting a plurality of line beams toward the target scene.
[Fig. 10B] Fig. 10B is a diagram schematically illustrating a relationship between beat signal strength and a measured distance in the example illustrated in Fig. 10A.
[Fig. 11A] Fig. 11A is a diagram schematically illustrating an example of emitting a plurality of irradiation lights toward the target scene.
[Fig. 11B] Fig. 11B is a diagram schematically illustrating a relationship between beat signal strength and a measured distance in the example illustrated in Fig. 11A.
[Fig. 12] Fig. 12 is a flowchart illustrating an example of an operation performed by the processing circuit in measuring an object in a target scene.
[Fig. 13] Fig. 13 is a flowchart illustrating another example of the operation performed by the processing circuit in measuring the object in the target scene.
[Fig. 14A] Fig. 14A is a diagram illustrating an application example where the measuring device is applied to onboard equipment.
[Fig. 14B] Fig. 14B is a diagram illustrating an application example where the measuring device is applied to the onboard equipment.
[Fig. 15A] Fig. 15A is a diagram illustrating an application example where the measuring device is applied to an autonomous mobile object.
[Fig. 15B] Fig. 15B is a diagram illustrating an application example where the measuring device is applied to the autonomous mobile object.
[Fig. 16A] Fig. 16A is a diagram illustrating an application example where the measuring device is applied to a robot arm.
[Fig. 16B] Fig. 16B is a diagram illustrating an application example where the measuring device is applied to the robot arm.

## Description of Embodiments

In the present disclosure, all or part of a circuit, unit, device, member or section, or all or part of a functional block in a block diagram may be implemented by one or more electronic circuits including, for example, a semiconductor device, a semiconductor integrated circuit (IC), or a large scale integration (LSI). The LSI or IC may be integrated on one chip, or may be configured by combining a plurality of chips. For example, functional blocks other than memory elements may be integrated into one chip. The electronic circuit referred to as the LSI or IC here may also be referred to as a system LSI, very large scale integration (VLSI), or ultra large scale integration (ULSI) depending on the degree of integration. A field programmable gate array (FPGA), which is programmed after the LSI is manufactured, or a reconfigurable logic device capable of reconfiguring connection relationships inside the LSI or setting up circuit partitions inside the LSI can also be used for the same purpose.

Furthermore, the function or operation of all or part of a circuit, unit, device, member or section can be performed by software processing. In this case, software is stored in one or more non-transitory storage media, such as a ROM, an optical disc, and a hard disk drive. When the software is executed by a processor, the functions specified by the software are executed by the processor and peripheral devices. A system or device may include one or more non-transitory storage media storing the software, the processor, and required hardware devices such as an interface.

In the present disclosure, "light" means electromagnetic waves including not only visible light (wavelength of about 400 nm to about 700 nm) but also ultraviolet rays (wavelength of about 10 nm to about 400 nm) and infrared rays (wavelength of about 700 nm to about 1 mm). In this specification, the ultraviolet rays may be referred to as "ultraviolet light" and the infrared rays may be referred to as "infrared light".

Exemplary embodiments of the present disclosure will be described below. Note that each of the embodiments described below illustrates a comprehensive or specific example. Numerical values, shapes, components, arrangement positions and connection forms of the components, steps, order of steps, and the like shown in the following embodiments are merely examples, and are not intended to limit the present disclosure. The components that are included in the following embodiment but are not described in the independent claims representing the highest concepts are described as arbitrary components. The drawings are schematic and not necessarily drawn to scale. In each drawing, substantially the same components are denoted by the same reference numerals, and redundant description may be omitted or simplified.

First, the findings forming the basis of the present disclosure will be described.

Patent Literatures 1 to 4 disclose measuring devices that adjust the range and accuracy of ranging by monotonically increasing or decreasing the frequency of light or millimeter waves over time. In the following description, monotonically increasing frequency with time is referred to as "up-chirp", while monotonically decreasing frequency with time is referred to as "down-chirp".

The device disclosed in Patent Literature 1 uses light to acquire measurement data on an object. In this device, the frequency range and time range for the next down-chirp period are determined based on a measurement result in an up-chirp period. Further, the frequency range and time range for the next up-chirp period are determined based on a measurement result in the down-chirp period. Thus, a range and accuracy of ranging are adjusted.

The devices disclosed in Patent Literatures 2 to 4 use millimeter waves to acquire measurement data on an object. In these devices, the frequency of the millimeter waves periodically changes with time in a triangular waveform. In the device disclosed in Patent Literature 2, the range and accuracy of ranging are adjusted by changing the frequency range of the triangular waves or changing transmission power of the millimeter waves. In the device disclosed in Patent Literature 3, the range and accuracy of ranging are adjusted by changing the frequency range and time range for each cycle of the triangular wave. The center frequency of the frequency range is constant. In the device disclosed in Patent Literature 4, the range and accuracy of ranging are adjusted by changing the frequency range for each cycle of the triangular wave in three stages, large, medium, and small. The lower limit of the frequency range is constant.

In recent years, the FMCW-LiDAR technology has been developed that achieves both a wide dynamic range and high resolution for distance, is less susceptible to disturbances, and can detect the speed of a fast-moving object. By using light instead of millimeter waves, the spot diameter of the light irradiating the object can be made relatively small. Therefore, measurement data of the object can be obtained more accurately. A measuring device according to an embodiment of the present disclosure utilizes the FMCW-LiDAR technology. The measuring device measures an object by switching between two modes. As a result, measurement data on the object can be obtained by appropriately changing a ranging range. A measuring device according to an embodiment of the present disclosure and a program used for the measuring device will be described below.

A measuring device according to a first item includes: a light source capable of emitting light for irradiating an object and changing a frequency of the light; an interference optical system that separates the light into reference light and irradiation light, and generates interference light by causing interference between the reference light and reflected light generated by reflection of the irradiation light on the object; a photodetector that receives the interference light and outputs a signal corresponding to an intensity of the interference light; and a processing circuit that controls the light source and generates and outputs data on a distance and/or velocity of the object based on the signal outputted from the photodetector. The processing circuit operates in a first mode and a second mode, causes the light source to emit light having a frequency that changes with time within a first frequency range in the first mode, and causes the light source to emit light having a frequency that changes with time within a second frequency range different from the first frequency range in the second mode. An absolute value of a time rate of change in frequency in the first frequency range is different from an absolute value of a time rate of change in frequency in the second frequency range. A center frequency of the first frequency range is different from a center frequency of the second frequency range. A lower limit of the first frequency range is different from a lower limit of the second frequency range.

The measuring device can acquire measurement data on the object by appropriately changing a ranging range.

A measuring device according to a second item is the measuring device according to the first item, in which the frequency of the light in the first mode and the frequency of the light in the second mode periodically change with time. A period of frequency change of the light in the first mode is equal to a period of frequency change of the light in the second mode.

When a laser diode is used as the light source in the measuring device, a change in heating amount of an active layer included in the laser diode due to increase and decrease in applied current value becomes constant, and an operation of linearly increasing and decreasing the frequency with respect to time can be maintained.

A measuring device according to a third item is the measuring device according to the first or second item, in which the absolute value of the time rate of change in frequency in the first frequency range is higher than the absolute value of the time rate of change in frequency in the second frequency range, and the center frequency of the first frequency range is higher than the center frequency of the second frequency range.

The measuring device can accurately measure a narrow ranging range in the first mode and can measure a wide distance range with a certain degree of accuracy in the second mode. Furthermore, when a laser diode having a negative rate of change in the frequency of light with respect to the applied current value is used as the light source, the intensity of light in the second mode can be increased higher than the intensity of light in the first mode.

A measuring device according to a fourth item is the measuring device according to any one of the first to third items, in which each period of frequency change of the light in the first mode includes a first up-chirp period and a first down-chirp period, and each period of frequency change of the light in the second mode includes a second up-chirp period and a second down-chirp period. In the first up-chirp period, the frequency monotonously increases from the lower limit to upper limit of the first frequency range. In the first down-chirp period, the frequency monotonously decreases from the upper limit to lower limit of the first frequency range. In the second up-chirp period, the frequency monotonously increases from the lower limit to upper limit of the second frequency range. In the second down-chirp period, the frequency monotonously decreases from the upper limit to lower limit of the second frequency range.

The measuring device makes it possible to change the frequency with time in a triangular waveform.

A measuring device according to a fifth item is the measuring device according to the fourth item, in which, in the first mode, the signal includes a first signal component corresponding to the intensity of the interference light based on the light in the first up-chirp period and a second signal component corresponding to the intensity of the interference light based on the light in the first down-chirp period, in the second mode, the signal includes a third signal component corresponding to the intensity of the interference light based on the light in the second up-chirp period and a fourth signal component corresponding to the intensity of the interference light based on the light in the second down-chirp period. The processing circuit generates and outputs the data on the distance and/or velocity of the object, based on the first and second signal components in the first mode, and generates and outputs the data on the distance and/or velocity of the object, based on the third and fourth signal components in the second mode.

In the first mode and the second mode, the measuring device can generate not only data on the distance of the object but also data on the velocity of the object.

A measuring device according to a sixth item is the measuring device according to the fourth or fifth item, in which a length of the first up-chirp period is equal to a length of the first down-chirp period, and a length of the second up-chirp period is equal to a length of the second down-chirp period.

The measuring device is advantageous in terms of maintaining the operation of increasing and decreasing the frequency linearly with respect to time.

A measuring device according to a seventh item is the measuring device according to any one of the first to sixth items, in which the processing circuit, may change the frequency of the light in a triangular waveform in each of the first and second modes.

A measuring device according to an eighth item includes a computer program executed by a computer in a system including a measuring device. The measuring device includes a light source capable of emitting light for irradiating an object and changing a frequency of the light, an interference optical system that separates the light into reference light and irradiation light, and generates interference light by causing interference between the reference light and reflected light generated by reflection of the irradiation light on the object, and a photodetector that receives the interference light and outputs a signal corresponding to an intensity of the interference light. The computer program causes the computer to execute causing the light source to emit light having a frequency that changes with time within a first frequency range in the first mode, causing the light source to emit light having a frequency that changes with time within a second frequency range in the second mode, and generating and outputting data on a distance and/or velocity of the object, based on the signal outputted from the photodetector in each of the first and second modes. An absolute value of a time rate of change in frequency in the first frequency range is different from an absolute value of a time rate of change in frequency in the second frequency range. A center frequency of the first frequency range is different from a center frequency of the second frequency range. A lower limit of the first frequency range is different from a lower limit of the second frequency range.

According to the program, measurement data on the object can be obtained by appropriately changing a ranging range.

(Embodiment)

First, with reference to Fig. 1, a configuration of a measuring device 100 according to an exemplary embodiment of the present disclosure will be described. Fig.

1 is a block diagram schematically illustrating the configuration of the measuring device according to the exemplary embodiment of the present disclosure. Fig. 1 illustrates an object 10 to be measured. The measuring device 100 illustrated in Fig. 1 includes a light source 20, an interference optical system 30, a beam shaper 40, an optical deflector 50, a photodetector 60, a processing circuit 70, and a memory 72. The thick arrows illustrated in Fig. 1 represent the flow of light. The thin arrows illustrated in Fig. 1 represent transmission and reception of signals.

The light source 20 emits laser light $20L_0$ whose frequency can be changed. The frequency can be time-varying in a triangular or sawtooth shape, for example, with a constant time period. The time period of frequency change may vary. The time period of the frequency may be greater than or equal to 1 microsecond and less than or equal to 10 milliseconds, for example. The frequency width of the frequency may be greater than or equal to 100 MHz and less than or equal to 1 THz, for example. The wavelength of the laser light may be included in a near-infrared wavelength range of greater than or equal to 700 nm and less than or equal to 2000 nm, for example. As for sunlight, the amount of near-infrared light is smaller than that of visible light. Therefore, use of near-infrared light as the laser light $20L_0$ can reduce the influence of sunlight as noise. Alternatively, the wavelength of the laser light $20L_0$ may be included in the visible light wavelength range of greater than or equal to 400 nm and less than or equal to 700 nm, or may be included in the ultraviolet light wavelength range. The light source 20 may include, for example, a distributed feedback laser diode or an external resonator laser diode. These laser diodes are inexpensive and small, are capable of single-mode oscillation, and can change the frequency of laser light according to the amount of current applied. The relationship between the applied current value and the frequency of the laser light $20L_0$ will be described later.

The interference optical system 30 includes a first fiber splitter 32, a second fiber splitter 34, and an optical circulator 36. The first fiber splitter 32 splits the laser light $20L_0$ emitted from the light source 20 into a reference light $20L_1$ and an irradiation light $20L_2$. The first fiber splitter 32 inputs the reference light $20L_1$ to the second fiber splitter 34 and inputs the irradiation light $20L_2$ to the optical circulator 36. The optical circulator 36 inputs the irradiation light $20L_2$ to the beam shaper 40. The optical circulator 36 inputs a reflected light $20L_3$ generated by irradiating the object 10 with the irradiation light $20L_2$ to the second fiber splitter 34. The second fiber splitter 34 inputs to the photodetector 60 an interference light $20L_4$ obtained by superimposing the reference light $20L_1$ and the reflected light $20L_3$ so as to interfere with each other.

The beam shaper 40 adjusts a spot shape of the irradiation light $20L_2$ emitted from the interference optical system 30. The irradiation light $20L_2$ after beam shaping may be a flashlight, a line beam, or a point beam, for example. The beam shaper 40 may include a collimating lens, for example.

The optical deflector 50 changes the direction of the irradiation light $20L_2$ emitted from the beam shaper 40. The optical deflector 50 allows a target scene including the object 10 to be scanned with the irradiation light $20L_2$. The optical deflector 50 may include a micromechanical electrosystem (MEMS) mirror or a galvanomirror, for example. Alternatively, the optical deflector 50 may be a beam scanning device using optical phased arrays and slow light waveguides, as described in International Publication No. WO 2019/130720.

The photodetector 60 detects the interference light $20L_4$. The photodetector 60 includes one or more photodetection elements. The photodetection element outputs a signal corresponding to the intensity of the interference light $20L_4$ based on the laser light $20L_0$.

In the measuring device 100, an optical path of the irradiation light $20L_2$ from the interference optical system 30 to the object 10 and an optical path of the reflected light $20L_3$ from the object 10 to the interference optical system 30 overlap each other. By adopting such a coaxial optical system, the configuration of the measuring device 100 can be simplified, and stable measurement can be achieved. Note that the two optical paths may be designed so as not to overlap each other.

The processing circuit 70 controls the operations of the light source 20, the beam shaper 40, the optical deflector 50, and the photodetector 60. The processing circuit 70 uses the FMCW-LiDAR technology to process a signal outputted from the photodetector 60. The processing circuit 70 generates and outputs measurement data regarding the distance and/or velocity of the object 10 based on the signal. The operations of the processing circuit 70 will be described in detail later.

A computer program executed by the processing circuit 70 is stored in the memory 72 such as a ROM or a random access memory (RAM). Thus, the measuring device 100 has a processor including the processing circuit 70 and the memory 72. The processing circuit 70 and the memory 72 may be integrated on one circuit board or provided on separate circuit boards. The control and signal processing functions of the processing circuit 70 may be distributed over multiple circuits. The processor may be remotely located away from other components and control the operations of the light source 20, the beam shaper 40, the optical deflector 50, and the photodetector 60 through a wired or wireless communication network.

Next, the FMCW-LiDAR technology will be briefly described with reference to Figs. 2A and 2B. The FMCW-LiDAR technology is disclosed in detail in Non-Patent Literature 1, for example.

Fig. 2A is a graph schematically illustrating time changes in the reference light $20L_1$ and the reflected light $20L_3$ with respect to the frequency when the object 10 is stationary. The solid line represents the reference light and the dashed line represents the reflected light. The frequency of the reference light $20L_1$ illustrated in Fig. 2A repeatedly changes over time in a triangular waveform. More specifically, the frequency of the reference light $20L_1$ repeats up-chirping and down-chirping. The increase in frequency in up-chirp and the decrease in frequency in down-chirp are equal to each other. The frequency of the reflected light $20L_3$ shifts along the time axis compared to the frequency of the reference light $20L_1$. The amount of time shift in the reflected light $20L_3$ is equal to the time required for the irradiation light $20L_2$ to be emitted from the measuring device 100 and reflected by the object 10 to return as the reflected light $20L_3$. As a result, the interference light $20L_4$ obtained by superimposing the reference light $20L_1$ and the reflected light $20L_3$ so as to interfere with each other has a frequency corresponding to the difference between the frequency of the reflected light $20L_3$ and the frequency of the reference light $20L_1$. The double-headed arrows illustrated in Fig. 2A represent the differences between the two frequencies. The photodetector 60 outputs a signal indicating the intensity of the interference light $20L_4$. The signal is called a beat signal. The frequency of the beat signal, that is, the beat frequency, is equal to the difference in frequency described above. The processing circuit 70 can generate data regarding the distance of the object 10 from the beat frequency.

Fig. 2B is a graph schematically illustrating time changes in the reference light $20L_1$ and the reflected light $20L_3$ with respect to the frequency when the object 10 approaches the measuring device 100. When the object 10 approaches, the frequency of the reflected light $20L_3$ shifts in an increasing direction along the frequency axis due to Doppler shift, compared to when the object 10 is stationary. The amount of shift in the frequency of the reflected light $20L_3$ depends on a component of a velocity vector of the object 10 projected in the direction of the reflected light $20L_3$. The beat frequency differs between the up-chirp period and the down-chirp period of the reference light $20L_1$ and the reflected light $20L_3$. In the example illustrated in Fig. 2B, the beat frequency in the down-chirp period of the both is higher than the beat frequency in the up-chirp period thereof. The processing circuit 70 can generate data on the velocity of object 10 from the difference in beat frequency due to Doppler shift. The processing circuit 70 can also generate data on the distance of the object 10 from the average value of the beat frequency during the up-chirp and down-chirp periods.

Next, the relationship between the distance from the measuring device 100 to the object 10 and the beat frequency will be described with reference to Fig. 3. Assuming that the frequency range in the up-chirp period or down-chirp period is $\Delta f$, the time required to change $\Delta f$ is $\Delta t$, the speed of light is c, and the distance from the measuring device 100 to the object 10 is d, the beat frequency $f_{beat}$ is expressed by the following Equation (1).

[Equation 1]

$$f_{beat} = \frac{2\Delta f}{c\Delta t} d \qquad (1)$$

The beat frequency $f_{beat}$ in Equation (1) is obtained by multiplying the time rate of change $\Delta f/\Delta t$ of the frequency by the round-trip time (2d/c) from the measuring device 100 to the object 10.

Fig. 3 is a graph illustrating the relationship between the distance d from the measuring device 100 to the object 10 and the beat frequency $f_{beat}$ according to Equation (1). The thick solid line represents a mode with $\Delta f$= 12.5 GHz and $\Delta t$= 10 $\mu$sec, that is, the time rate of change in frequency is $\Delta f/\Delta t$= $1.25\times10^{15}$ Hz/sec. The thick dashed line represents a mode with $\Delta f$= 1.12 GHz and $\Delta t$= 10 $\mu$sec, that is, the time rate of change in frequency is $\Delta f/\Delta t$= $1.12\times10^{14}$ Hz/sec. The thin horizontal dashed line is an example of a maximum measurable value of the beat frequency $f_{beat}$, which is 75 MHz.

According to Equation (1), the ranging range d increases as the time rate of change $\Delta f/\Delta t$ of the frequency decreases. In the example illustrated in Fig. 3, considering the maximum measurable value of the beat frequency $f_{beat}$, the ranging range d is 9 m in a mode with a high time rate of change in frequency and is 100 m in a mode with a low time rate of change in frequency. The mode with a high time rate of change in frequency is a mode with a narrow ranging range, that is, a narrow range mode. The mode with a low time rate of change in frequency is a mode with a wide ranging range, that is, a wide range mode.

The accuracy of ranging is improved as the time rate of change in frequency increases. This is because the higher the time rate of change in frequency $\Delta f/\Delta t$, the greater the amount of change in the beat frequency $f_{beat}$ with respect to the amount of change in the distance d. The beat frequency $f_{beat}$ is obtained by Fourier transforming a beat signal with respect to time. The greater the amount of change in the beat frequency $f_{beat}$ compared to the frequency resolution of the Fourier transform, the higher the accuracy of ranging. In the example illustrated in Fig. 3, when ranging is performed with a frequency resolution of 800 Hz, the ranging accuracy is about 0.1 mm in the narrow range mode and is about several mm in the wide range mode. The ranging accuracy is 50 repeat accuracy.

When measuring not only the distance but also the velocity, the beat frequency $f_{beat}$ obtained by adding the amount of change due to Doppler shift is required to be less than or equal to the maximum measurable value. Considering the amount of change due to Doppler shift, in the wide range mode, when $\Delta f$ = 0.56 GHz and $\Delta t$ = 10 $\mu$sec, that is, when the time rate of change in frequency is $\Delta f/\Delta t$ = $5.6 \times 10^{13}$ Hz/sec, the ranging accuracy is about several cm.

The narrow range mode may be applied when accurately generating measurement data on the object 10 at a short distance, for example. The short distance can be, for example, greater than or equal to 0 m and less than or equal to 10 m. The wide range mode may be applied when generating measurement data on the object 10 at a short distance and at a long distance with some degree of accuracy, for example. The long distance can be, for example, greater than 10 m and less than or equal to 200 m. The time rates of change in frequency in the narrow and wide range modes are determined by the maximum measurable value of the beat frequency $f_{beat}$ in Equation (1) and the short and long distances d, respectively. In this specification, the narrow range mode is also referred to as a "first mode" and the wide range mode is also referred to as a "second mode".

Next, with reference to Fig. 4, description is given of an example of the relationship between the applied current value and the frequency of laser light in a distributed feedback laser diode, which is an example of the light source 20. Fig. 4 is a graph schematically illustrating the relationship between the applied current value and the frequency of the laser light $20L_0$ in the distributed feedback laser diode. When a current is applied to the distributed feedback laser diode, an active layer included in the laser diode is heated and a resonator length of the active layer slightly changes. As the resonator length changes, the frequency of the laser light $20L_0$ changes. As the applied current value increases, the amount of change in the frequency of the laser light $20L_0$ increases with an increase in heating amount of the active layer.

In the example illustrated in Fig. 4, when the current value has a DC component of 250 mA and an AC component of 266 mAp-p, the frequency range of the laser light $20L_0$ is $\Delta f$= 12.5 GHz. When the current value has a DC component of 250 mA and an AC component of 10 mAp-p, the frequency range of the laser light of 250 mA is $\Delta f$= 0.56 GHz. When a time period of the applied current is $2\Delta t$= 20 $\mu$sec, the time rate of change in frequency $\Delta f/\Delta t$= $1.25 \times 10^{15}$ Hz/sec in the narrow range mode and the time rate of change in frequency $\Delta f/\Delta t$= $5.6\times10^{13}$ Hz/sec in the wide range mode can be realized.

However, as illustrated in Fig. 4, the frequency of the laser light changes nonlinearly with respect to the applied current value. Even when the applied current changes linearly with time, the frequency of the laser light does not actually change linearly. Therefore, unlike the example illustrated in Fig. 2A, the beat frequency $f_{beat}$ to be actually measured is not constant over time. The use of such a beat frequency $f_{beat}$ decreases the ranging accuracy. A decrease in ranging accuracy can be improved by the following two methods, for example.

In one method, a change in the frequency of the laser light due to the applied current value is monitored by a measuring instrument, and the result is fed back to adjust the applied current value, thus making it possible to linearly change the frequency of the laser light.

The other method is as follows. In a configuration in which the distance from the measuring device 100 to the object 10 is known, the applied current is periodically changed over time in a triangular waveform, and a time change of the beat signal that vibrates following the change is plotted. From the plotted results, the applied current value is associated with a round trip time during which the beat signal vibrates back and forth once with respect to the current value. By dividing the period of the beat signal that should be found from the known distance by the round trip time for each applied current value, a correction ratio of the round trip time to the applied current value can be obtained. A correction table indicating the correction ratio is stored in a storage device (not illustrated) provided separately in the measuring device 100.

With reference to the correction table, the processing circuit 70 corrects the time change of the beat signal by multiplying the round-trip time of the beat signal by the correction ratio according to the applied current value, that is, by rescaling. By Fourier transforming the rescaled beat signal with respect to time, the beat frequency $f_{beat}$ can be calculated more accurately.

Unlike a monitor-based feedback method, the rescaling method does not require a separate measuring instrument and signal processing can improve reduced ranging accuracy. The cost can be reduced since no measuring instrument is required. In the rescaling method, the lower the nonlinearity of the frequency of the laser light with respect to the applied current value, the more the reduced ranging accuracy can be improved. When rescaling does not improve the reduced ranging accuracy, the ranging accuracy does not improve even when the time rate of change in frequency $\Delta f/\Delta t$ is high.

In the example illustrated in Fig. 4, the portion where the frequency of the laser light changes nonlinearly with respect to the current value is used for the narrow range mode and the wide range mode. Furthermore, the DC component of the current value is the same in the narrow range mode and the wide range mode. As a result, the frequency range in the narrow range mode includes the frequency range in the wide range mode. In other words, the upper limit of the frequency range in the narrow range mode is higher than the upper limit of the frequency range in the wide range mode, and the lower limit of the frequency range in the narrow range mode is lower than the lower limit of the frequency range in the wide range mode.

Two different portions in which the frequency of the laser light varies nonlinearly with respect to the current value may be used for the narrow range mode and the wide range mode. Next, with reference to Fig. 5, description is given of the correspondence relationship between the current value range and the frequency range in the graph illustrated in Fig. 4. Fig. 5 is a graph for explaining the correspondence relationship between the current value range and the frequency range in the graph illustrated in Fig. 4. As illustrated in Fig. 5, as for the current value range, $\Delta I_1$, $\Delta I_2$, and $\Delta I_3$ are continuously arranged in this order in an increasing direction of the current value. As for the frequency range, $\Delta f_1$, $\Delta f_2$, and $\Delta f_3$ are continuously arranged in this order in a decreasing direction of the frequency. $\Delta f_1$, $\Delta f_2$, and $\Delta f_3$ are fre-

quency ranges obtained when the current value changes through the ranges of $\Delta I_1$, $\Delta I_2$, and $\Delta I_3$, respectively. The graph illustrated in Fig. 5 is divided into a first correspondence relationship between $\Delta I_1$ and $\Delta f_1$, a second correspondence relationship between $\Delta I_2$ and $\Delta f_2$, and a third correspondence relationship between $\Delta I_3$ and $\Delta f_3$. Each correspondence relationship is approximately linear. Therefore, the monitor-based feedback or rescaling is not necessarily required. Even when the applied current value is adjusted by the monitor-based feedback, the correspondence relationship is approximately linear, and thus the reduced ranging accuracy can be improved by a slight adjustment. Even when the time change of the beat signal is corrected by rescaling, the correspondence relationship is approximately linear, and thus the reduced ranging accuracy can be improved by a slight correction. The relationship $\Delta I_1 > \Delta I_2 > \Delta I_3$ is satisfied for the width of the current value range, and the relationship $\Delta f_2 > \Delta f_3 > \Delta f_1$ is satisfied for the width of the frequency range. As for the ratio of the frequency range to the current value range, the relationship $\Delta f_3/\Delta I_3 > \Delta f_2/\Delta I_2 > \Delta f_1/\Delta I_1$ is satisfied.

In the first correspondence relationship, the current value range that achieves linearity is the widest among the three correspondence relationships, but the frequency range is the narrowest among the three correspondence relationships. In the second correspondence relationship, the current value range that achieves linearity is narrower than that in the first correspondence relationship, but the frequency range is the widest among the three correspondence relationships. In the third correspondence relationship, the current value range that achieves linearity is the narrowest among the three correspondence relationships, but the frequency range is wider than that in the first correspondence relationship.

In the first to third correspondence relationships, when the applied current is changed with time in a triangular waveform with the same period of $2\Delta t$, the second correspondence relationship can be applied to the narrow range mode, and the first and third correspondence relationships can be applied to the wide range mode. This is because the time rate of change in frequency in the second correspondence relationship is higher than the time rate of change in frequency in the first and third correspondence relationships. In the wide range mode, the higher the intensity of the irradiation light $20L_2$, the more effective reflected light $20L_3$ can be obtained from the object 10 at a long distance. The intensity of the laser light $20L_0$ emitted from the light source 20 increases with the applied current value. The third correspondence relationship is more suitable for the wide range mode than the first correspondence relationship in terms of obtaining the irradiation light $20L_2$ of higher intensity.

However, from an eye safe standpoint, the intensity of the irradiation light $20L_2$ is less than or equal to a predetermined intensity regardless of the wide range mode or the narrow range mode. This is because it is assumed that a person suddenly enters a short distance or that a person observes with binoculars from a long distance. When the wavelength is 1550 nm, the period $2\Delta t$ of the triangular wave is sufficiently long, and continuous light emission is more than or equal to 10 sec, the intensity of the irradiation light $20L_2$ may be less than or equal to 10 mW, for example. The object 10 may have low reflectance even at a short distance. Therefore, it is advantageous that the intensity of the irradiation light $20L_2$ is as high as possible within 10 mW regardless of the wide range mode or the narrow range mode.

Next, with reference to Figs. 6A and 6B, description is given of an example of how the frequency and intensity of the laser light $20L_0$ change over time in the narrow range mode and the wide range mode. Fig. 6A is a graph schematically illustrating a relationship between the frequency of the laser light $20L_0$ and time in the narrow range mode and the wide range mode. Fig. 6B is a graph schematically illustrating a relationship between the intensity of the laser light $20L_0$ and time in the narrow range mode and the wide range mode. The narrow range mode illustrated in Figs. 6A and 6B is based on the second correspondence relationship illustrated in Fig. 5. The wide range mode illustrated in Figs. 6A and 6B is based on the third correspondence relationship illustrated in Fig. 5.

As illustrated in Fig. 6A, the frequency of the laser light $20L_0$ in the narrow range mode periodically changes over time within the frequency range $\Delta f_2$, and the frequency of the laser light $20L_0$ in the wide range mode periodically changes over time within the frequency range $\Delta f_3$. The narrow range mode and the wide range mode have the same period $2\Delta t$ of frequency change of the laser light $20L_0$. By fixing the period regardless of the narrow range mode or the wide range mode, a change in heating amount of the active layer included in the laser diode due to increase and decrease in the applied current value becomes constant, and linear increase and decrease in frequency can be maintained.

Each period of frequency change in the narrow range mode includes the following first up-chirp period and second up-chirp period. In the first up-chirp period, the frequency monotonously increases from the lower limit to the upper limit of the frequency range $\Delta f_2$. In the first down-chirp period, the frequency monotonously decreases from the upper limit to the lower limit of the frequency range $\Delta f_2$. Each period of frequency change in the wide range mode includes the following second up-chirp period and second down-chirp period. In the second up-chirp period, the frequency monotonously increases from the lower limit to the upper limit of the frequency range $\Delta f_3$. In the second down-chirp period, the frequency monotonously decreases from the upper limit to the lower limit of the frequency range $\Delta f_3$.

When the first up-chirp period and the first down-chirp period are equal to each other, and the second up-chirp period $\Delta t$ and the second down-chirp period are equal to each other, this is advantageous to maintain the linear increase and decrease in the frequency described above. In addition, when the first up-chirp period and the second up-chirp period are equal to each other, and the first down-chirp period and the second down-chirp period are equal to each other, this is further advantageous to maintain the linear increase and decrease in the frequency described above. In the example illustrated in Figs. 6A and 6B, the first up-chirp period, the first down-chirp period, the second up-chirp period, and the second down-chirp period are all $\Delta t$.

A signal outputted from the photodetector 60 in the narrow range mode includes a first signal component in the first up-chirp period and a second signal component in the first down-chirp period. The processing circuit 70 generates and outputs measurement data based on the first and second signal components. A signal outputted from the photodetector 60 in the wide range mode includes a third signal component in the second up-chirp period and a fourth signal component in the second down-chirp period. The processing circuit 70 generates and outputs measurement data based on the third and fourth signal components. The measurement data in the narrow range mode and the wide range mode generated as described above includes not only data on the distance of the object 10 but also data on its velocity.

As illustrated in Fig. 6A, the width of the frequency range $\Delta f_2$ in the narrow range mode is wider than the width of the frequency range $\Delta f_3$ in the wide range mode. The frequency range $\Delta f_2$ in the narrow range mode does not overlap the frequency range $\Delta f_3$ in the wide range mode except for the following frequency. At this frequency, the lower limit of the frequency range $\Delta f_2$ in the narrow range mode matches the upper limit of the frequency range $\Delta f_3$ in the wide range mode. The absolute value $\Delta f_2/\Delta t$ of the time rate of change in frequency within the frequency range $\Delta f_2$ in the narrow range mode is higher than the absolute value $\Delta f_3/\Delta t$ of the time rate of change in frequency within the frequency range $\Delta f_3$ in the wide range mode. The center frequency of the frequency range $\Delta f_2$ in the narrow range mode is higher than the center frequency of the frequency range $\Delta f_3$ in the wide range mode. The upper and lower limits of the frequency range $\Delta f_2$ in the narrow range mode are higher than the upper and lower limits of the frequency range $\Delta f_3$ in the wide range mode, respectively. The frequency in the narrow range mode is higher than or equal to the frequency in the wide range mode.

As described above, the width of the frequency range $\Delta f_2$ in the narrow range mode is different from the width of the frequency range $\Delta f_3$ in the wide range mode. The absolute value of the time rate of change in frequency within the frequency range $\Delta f_2$ in the narrow range mode is different from the absolute value of the time rate of change in frequency within the frequency range $\Delta f_2$ in the wide range mode. The center frequency of the frequency range $\Delta f_2$ in the narrow range mode is different from the center frequency of the frequency range $\Delta f_3$ in the wide range mode. The upper and lower limits of the frequency range $\Delta f_2$ in the narrow range mode are different from the upper and lower limits of the frequency range $\Delta f_3$ in the wide range mode, respectively.

As illustrated in Fig. 6B, the width of the intensity range in the narrow range mode is wider than the width of the intensity range in the wide range mode. The intensity range in the narrow range mode does not overlap the intensity range in the wide range mode, except for the following intensity. At this intensity, the upper limit of the intensity range in the narrow range mode matches the lower limit of the intensity range in the wide range mode. The absolute value of the time rate of change in intensity within the intensity range in the narrow range mode is higher than the absolute value of the time rate of change in intensity within the intensity range in the wide range mode. The central intensity of the intensity range in the narrow range mode is lower than the central intensity of the intensity range in the wide range mode. The upper and lower limits of the intensity range in the narrow range mode are lower than the upper and lower limits of the intensity range in the wide range mode, respectively. The intensity in the wide range mode is higher than or equal to the intensity in the narrow range mode. Therefore, effective reflected light $20L_3$ can be obtained from the object 10 at a long distance in the wide range mode. When the intensity in the narrow range mode is also sufficiently high, effective reflected light $20L_3$ can also be obtained from the object 10 with low reflectance at a short distance. The intensity in the narrow range mode may be, for example, higher than or equal to 1 mW and lower than or equal to 6 mW. The intensity in the wide range mode may be, for example, higher than or equal to 6 mW and lower than or equal to 10 mW.

As described above, the width of the intensity range in the narrow range mode is different from the width of the intensity range in the wide range mode. The absolute value of the time rate of change in intensity within the intensity range in the narrow range mode is different from the absolute value of the time rate of change in intensity within the intensity range in the wide range mode. The central intensity of the intensity range in the narrow range mode is different from the central intensity of the intensity range in the wide range mode. The upper and lower limits of the intensity range in the narrow range mode are different from the upper and lower limits of the intensity range in the wide range mode, respectively.

As illustrated in Figs. 6A and 6B, the intensity decreases as the frequency increases and the intensity increases as the frequency decreases. This increase/decrease relationship is due to the fact that the frequency change rate with respect to the current value is negative, as illustrated in Fig. 5.

Note that the current value ranges $\Delta I_1$ to $\Delta I_3$ illustrated in Fig. 5 are merely an example. Unlike the example illustrated in Fig. 5, the current value ranges $\Delta I_1$ and $\Delta I_2$ may partially overlap each other, and the current value ranges $\Delta I_2$ and $\Delta I_3$ may partially overlap each other. For example, when the current value ranges $\Delta I_2$ and $\Delta I_3$

partially overlap each other, the relationship of the lower limit of the current value range $\Delta I_2$ < the lower limit of the current value range $\Delta I_3$ < the upper limit of the current value range $\Delta I_2$ < the upper limit of the current value range $\Delta I_3$ is satisfied. In this case, the frequency range $\Delta f_2$ in the narrow range mode and the frequency range $\Delta f_3$ in the wide range mode partially overlap each other, and the relationship of the lower limit of the frequency range $\Delta f_3$ < the lower limit of the frequency range $\Delta f_2$ < the upper limit of the frequency range $\Delta f_3$ < the upper limit of the frequency range $\Delta f_2$ is satisfied. Furthermore, the intensity range in the narrow range mode and the intensity range in the wide range mode partially overlap each other, and the relationship of the lower limit of the intensity range in the narrow range mode < the lower limit of the intensity range in the wide range mode < the upper limit of the intensity range in the narrow range mode < the upper limit of the intensity range in the wide range mode is satisfied.

Next, with reference to Figs. 7A to 7C, description is given of an operation example of FMCW processing performed by the processing circuit 70. Fig. 7A is a flowchart illustrating an example of operations performed by the processing circuit 70. The processing circuit 70 performs the operations of steps S101 to S105 illustrated in Fig. 7A. Figs. 7B and 7C are flowcharts illustrating examples of operations performed by the processing circuit 70 in steps S101 and S104 illustrated in Fig. 7A, respectively.

<Step S101>

The processing circuit 70 measures the object 10 at a long or short distance in the wide range mode. The details of this operation are as illustrated in Fig. 7B. The processing circuit 70 causes the light source 20 to emit the laser light $20L_0$ having a frequency that changes with time in the wide range mode (step S101A). The processing circuit 70 causes the photodetector 60 to detect the interference light $20L_4$ (step S101B). The processing circuit 70 generates and outputs measurement data on the distance and velocity of the object 10 based on a signal outputted from the photodetector 60 (step S101C).

<Step S102>

The processing circuit 70 determines from the measurement result in step S101 whether or not the object 10 is at a short distance. A result of measurement by another measuring sensor may be used instead of the measurement result in step S101. When a determination result is "Yes", the processing circuit 70 performs an operation in step S103. When the determination result is "No", the processing circuit 70 performs the operation in step S101.

<Step S103>

The processing circuit 70 determines whether or not measurement can be performed in the narrow range mode. In the narrow range mode, when the beat frequency including Doppler shift is lower than or equal to the measurable upper limit, the measurement can be performed in the narrow range mode. When a determination result is "Yes", the processing circuit 70 performs an operation in step S104. When the determination result is "No", the processing circuit 70 performs the operation in step S101.

<Step S104>

The processing circuit 70 measures the object 10 at a short distance in the narrow range mode. The details of this operation are as illustrated in Fig. 7C. The processing circuit 70 causes the light source 20 to emit the laser light $20L_0$ having a frequency that changes with time in the narrow range mode (step S104A). The processing circuit 70 causes the photodetector 60 to detect the interference light $20L_4$ (step S104B). The processing circuit 70 generates and outputs measurement data on the distance and velocity of the object 10 based on a signal outputted from the photodetector 60 (step S104C). The ranging accuracy in the narrow range mode in step S104 is improved compared to the ranging accuracy in the wide range mode in step S101.

<Step S105>

The processing circuit 70 determines whether to end the measurement. When a determination result is "Yes", the processing circuit 70 terminates the measurement operation. When the determination result is "No", the processing circuit 70 performs the operation in step S102. However, in step S102, the processing circuit 70 determines whether or not the object 10 is at a short distance, based on the ranging result in step S104 instead of the measurement result in step S101.

In the measuring device 100 according to this embodiment, by switching between the wide range mode and the narrow range mode, the measurement data on the object 10 can be obtained by appropriately changing the range and accuracy of ranging and the intensity of the irradiation light $20L_2$.

(Measurement of Object in Target Scene)

Next, with reference to Figs. 8 to 11B, description is given of an example of measuring an object in a target scene using the measuring device 100 according to this embodiment. In measuring the object in the target scene, the processing circuit 70 generates measurement data on the object in the wide range mode or narrow range mode, as illustrated in Fig. 7A. When the object is located at a short distance and can be measured in the narrow range mode, the processing circuit 70 switches from the wide range mode to the narrow range mode.

Fig. 8 is a perspective view schematically illustrating an example of a vehicle 200 having the measuring device 100 mounted on its front surface. In the example illustrated in Fig. 8, a traveling direction of the vehicle 200 is parallel to an X direction, a vehicle height direction is parallel to a Y direction, and a direction of crossing a road is parallel to a Z direction. The vehicle height direction is a direction perpendicular to the road surface and away from the road surface. In the example illustrated in Fig. 8, the measuring device 100 on the vehicle 200 emits irradiation light $10L_2$ toward the target scene in front of the vehicle 200. The irradiation light $20L_2$ in the example illustrated in Fig. 8 is a flashlight, but may be a line beam or a point beam. In the following description, the irradiation light will be referred to as "flashlight", "line beam" or "point beam". The mounting position of the measuring device 100 on the vehicle 200 is not limited to its front surface, but may be its upper surface, side surface, or rear surface. The mounting position is appropriately determined depending on where the target scene is situated. In an example described below, the photodetector 60 including a single photodetection element detects interference light $20L_4$.

An object in the target scene is measured in the following steps. First, the target scene is irradiated with a flashlight. Fig. 9A is a diagram schematically illustrating an example of emitting the flashlight $20L_2$ toward the target scene. A rectangular area surrounded by a thick solid line represents the target scene ahead as seen from the vehicle 200 traveling on the road. The same applies to the following drawings. In the target scene, a preceding vehicle is running on the road, and there is a pedestrian on a sidewalk on the side of the road. There are three trees along the sidewalk. The five objects in the target scene are the pedestrian, the three roadside trees, and the preceding vehicle in ascending order of distance. The distances to the pedestrian, the leftmost, center, and rightmost roadside trees, and the preceding vehicle are $d_1$ to $d_5$, respectively. A dashed rectangle illustrated in Fig. 9A represents an irradiation spot of the flashlight $20L_2$. The irradiation spot of the flashlight $20L_2$ illustrated in Fig. 9A includes the five objects in the target scene. In the example illustrated in Fig. 9A, the photodetector 60 including a single photodetection element detects the interference light $20L_4$.

As illustrated in Fig. 9A, when looking forward from the vehicle 200, the road surface changes gradually in the vehicle height direction. While the road surface changes continuously, the objects such as the pedestrian and the vehicle on the road surface change discontinuously with respect to the road surface. Therefore, the object can be detected by irradiating the object with the flashlight $20L_2$.

Fig. 9B is a diagram schematically illustrating the relationship between beat signal strength and the measured distance in the example illustrated in Fig. 9A. Five peaks appear due to irradiation of the flashlight $20L_2$. By irradiating five objects with the flashlight $20L_2$, the distances to the five objects can be measured at once. The single photodetection element can quickly determine the distances of the five objects.

Next, spatial resolution of the target scene in the Z direction may be improved by scanning the target scene along the Z direction with the line beam $20L_2$ extending in the Y direction. Fig. 10A is a diagram schematically illustrating an example of emitting a plurality of line beams $20L_2$ toward the target scene. Dashed ellipses illustrated in Fig. 10A represent irradiation spots of a first line beam $20L_{2a}$ to a fourth line beam $20L_{2d}$ emitted at four different angles along the Z direction. The distances at the top, center, and bottom of the irradiation spot of the line beam $20L_2$ do not change significantly even when its emission angle changes along the Z direction. Therefore, when scanning the target scene in the horizontal direction with the line beam $20L_2$ extending in the vertical direction, there is an advantage that the resolution of the distance in the horizontal direction is high.

In the example illustrated in Fig. 10A, the irradiation spot of the first line beam $20L_{2a}$ includes the leftmost roadside tree. The irradiation spot of the second line beam $20L_{2b}$ includes the center roadside tree. The irradiation spot of the third line beam $20L_{2c}$ includes the pedestrian and the rightmost roadside tree. The irradiation spot of the fourth line beam $20L_{2d}$ includes the preceding vehicle. The first to fourth line beams $20L_{2a}$ to $20L_{2d}$ may be emitted toward the target scene in this order or in reverse order. Alternatively, the first to fourth line beams $20L_{2a}$ to $20L_{2d}$ may be emitted randomly such as the third line beam $20L_{2c}$, the second line beam $20L_{2b}$, the fourth line beam $20L_{2d}$, and the first line beam $20L_{2a}$.

Fig. 10B is a diagram schematically illustrating the relationship between the beat signal strength and the measured distance in the example illustrated in Fig. 10A. Four graphs in Fig. 10B illustrate beat signals generated by the irradiation of the first to fourth line beams $20L_{2a}$ to $20L_{2d}$. The irradiation of the first line beam $20L_{2a}$, the second line beam $20L_{2b}$, and the fourth line beam $20L_{2d}$ cause single peaks at distances $d_2$, $d_3$, and $d_5$, respectively. On the other hand, the irradiation of the third line beam $20L_{2c}$ causes two peaks at distances $d_1$ and $d_4$. The measuring device 100 according to this embodiment can measure the distances to the plurality of objects at once by irradiating the plurality of objects with one line beam $20L_2$. The single photodetection element can quickly determine rough positions of the five objects from the known exit angles of the first to fourth line beams $20L_{2a}$ to $20L_{2d}$.

The irradiation spot of the third line beam $20L_{2c}$ illustrated in Fig. 10A includes two objects. In this case, the spatial resolution of the target scene in the Y direction may be improved by scanning the target scene along the Y direction with the point beam $20L_2$. Fig. 11A is a diagram schematically illustrating an example of emitting a plurality of point beams $20L_2$ toward the target scene.

Dashed ellipses illustrated in Fig. 11A represent irradiation spots of a fifth point beam $20L_{2e}$ to a ninth point beam $20L_{2i}$ emitted at five different angles along the Y direction.

Fig. 11B is a diagram schematically illustrating the relationship between beat signal strength and the measured distance in the example illustrated in Fig. 11A. The five graphs in Fig. 11B illustrate beat signals generated by the irradiation of the fifth to ninth point beams $20L_{2e}$ to $20L_{2i}$. The irradiation of the fifth to seventh point beams $20L_{2e}$ to $20L_{2g}$ causes a single peak at a distance $d_4$. On the other hand, the irradiation of the eighth and ninth point beams $20L_{2h}$ and $20L_{2i}$ causes a single peak at a distance $d_1$. From the known exit angles of the fifth to ninth point beams $20L_{2e}$ to $20L_{2i}$, three-dimensional positions of the objects can be determined more accurately.

Next, with reference to Fig. 12, description is given of an example of operations performed by the processing circuit 70 in measuring an object in a target scene. Fig. 12 is a flowchart illustrating an example of the operations performed by the processing circuit 70 in measuring the object in the target scene. The processing circuit 70 executes the following operations in steps S201 to S207.

<Step S201>

The processing circuit 70 performs measurement using the wide range mode and irradiating the target scene with the flashlight $20L_2$.

<Step S202>

The processing circuit 70 determines whether or not there is an object at a very close distance based on the measurement result in step S201. The very close distance is greater than or equal to 0 m and less than or equal to 5 m, for example, from the vehicle 200 to the object. When a determination result is "Yes", the processing circuit 70 performs an operation in step S203. When the determination result is "No", the processing circuit 70 performs an operation in step S204.

<Step S203>

The processing circuit 70 transmits a collision avoidance signal to a processing circuit of the vehicle 200. Even when it is unknown where the object is located in the target scene, collision avoidance behavior such as stopping, for example, can prevent the vehicle 200 from colliding with the object.

<Step S204>

The processing circuit 70 determines whether to improve the spatial resolution in the Z direction based on the measurement result in step S201. When a determination result is "Yes", the processing circuit 70 performs an operation in step S205. When the determination result is "No", the processing circuit 70 performs the operation in step S201. When the object is not at a very close distance but at a short distance, the processing circuit 70 may improve the spatial resolution in the Z direction. When there is no object in the target scene or when the object is not at a short distance but at a long distance, the processing circuit 70 does not necessarily need to improve the spatial resolution in the Z direction.

<Step S205>

The processing circuit 70 performs measurement using the wide range mode or the narrow range mode and irradiating the target scene with the line beam $20L_2$. The processing circuit 70 performs measurement in the wide range mode and, in some cases, in the narrow range mode, as illustrated in Fig. 7A.

<Step S206>

The processing circuit 70 determines whether to improve the spatial resolution in the Y direction based on the measurement result in step S205. When a determination result is "Yes", the processing circuit 70 performs an operation in step S207. When the determination result is "No", the processing circuit 70 performs the operation in step S205. When the irradiation spot of the line beam $20L_2$ includes a plurality of objects, the processing circuit 70 may improve the spatial resolution in the Y direction. Otherwise, the processing circuit 70 does not necessarily need to improve the spatial resolution in the Y direction.

<Step S207>

The processing circuit 70 performs measurement using the wide range mode or the narrow range mode and irradiating the target scene with the point beam $20L_2$. The processing circuit 70 performs measurement in the wide range mode and, in some cases, in the narrow range mode, as illustrated in Fig. 7A.

Unlike the examples illustrated in Figs. 9A, 10A, and 11A, the entire target scene may be two-dimensionally scanned along the Y and Z directions with the point beam $20L_2$. Next, with reference to Fig. 13, description is given of another example of operations of the processing circuit 70 in scanning the target scene. Fig. 13 is a flowchart illustrating another example of the operations of the processing circuit 70 in scanning the target scene. The processing circuit 70 executes the following operations in steps S301 to S306.

<Step S301>

The processing circuit 70 performs measurement using the wide range mode and irradiating the target scene with the point beam $20L_2$.

<Step S302>

The processing circuit 70 determines whether there is an object at a very close distance based on the ranging result in step S301. When a determination result is "Yes", the processing circuit 70 performs an operation in step S303. When the determination result is "No", the processing circuit 70 performs an operation in step S304.

<Step S303>

The operation in step S303 is the same as the operation in step S203 illustrated in Fig. 12.

<Step S304>

The processing circuit 70 determines whether or not there is an object at a short distance, not at a very close distance. When a determination result is "Yes", the processing circuit 70 performs an operation in step S305. When the determination result is "No", the processing circuit 70 performs the operation in step S301.

<Step S305>

The processing circuit 70 determines whether or not measurement can be performed in the narrow range mode. When a determination result is "Yes", the processing circuit 70 performs an operation in step S306. When the determination result is "No", the processing circuit 70 performs the operation in step S301.

<Step S306>

The processing circuit 70 uses the narrow range mode to measure an object at a short distance by irradiating the target scene with the point beam $20L_2$.

(Application Example)

An application example of the measuring device according to the above embodiment will be described.

Figs. 14A and 14B are diagrams illustrating application examples where the measuring device according to the embodiment of the present disclosure is applied to onboard equipment. The measuring device 100 is mounted on the front surface of the vehicle 200. In this application example, the measuring device 100 switches a measurement range according to a vehicle speed of the vehicle 200. For example, when the vehicle speed is higher than or equal to a predetermined threshold (for example, 10 km/h) as illustrated in Fig. 14A, the measuring device 100 performs ranging in the wide range mode. On the other hand, when the vehicle speed is less than the predetermined threshold as illustrated in Fig. 14B, the measuring device 100 performs ranging in the narrow range mode.

The criteria for switching the measurement range are not limited to the vehicle speed. For example, the measuring device 100 may perform ranging in the wide range mode when the environment in which the vehicle 200 travels is a highway, and may perform ranging in the narrow range mode when the environment is an urban area. The environment in which the vehicle 200 travels can be obtained from a navigation system.

Figs. 15A and 15B are diagrams illustrating an application example where the measuring device according to the embodiment of the present disclosure is applied to an autonomous mobile object. An autonomous mobile object 300 is, for example, an automatic guided vehicle (AGV) or an automated guided forklift (AGF) for automatic load transportation in a warehouse. The measuring device 100 is mounted on the body of the autonomous mobile object 300.

When a distance to a target object 400 is more than or equal to a predetermined threshold (for example, 10 m) during running as illustrated in Fig. 15A, the measuring device 100 performs ranging in the wide range mode. On the other hand, when the distance to the target object 400 is less than the predetermined threshold as illustrated in Fig. 15B, the measuring device 100 performs ranging in the narrow range mode.

For example, when the target object 400 is a charging base of the autonomous mobile object 300, the ranging can be performed with millimeter accuracy in the narrow range mode. Thus, the autonomous mobile object 300 can be properly connected to the charging base. The operation of the measuring device 100 for switching between the wide range mode and the narrow range mode is the same as the operation illustrated in Fig. 7A.

Figs. 16A and 16B are diagrams illustrating an application example where the measuring device according to the embodiment of the present disclosure is applied to a robot arm. The measuring device 100 is mounted on the tip of a robot arm 500.

In picking up a part 600 with the robot arm 500, the measuring device 100 performs ranging in the wide range mode when the distance from the tip of the arm to the object is greater than or equal to a predetermined threshold (for example, 30 cm) as illustrated in Fig. 16A. Next, as illustrated in Fig. 16B, when the arm is brought closer to the part 600 and the distance from the tip of the arm to the part 600 approaches less than the predetermined threshold, the measuring device 100 performs ranging in the narrow range mode. Since the ranging can be performed with millimeter accuracy in the narrow range mode, the position and orientation of the part 600 can be accurately measured and the arm can properly pick up the part 600. The operation of the measuring device 100 for switching between the wide range mode and the narrow range mode is the same as the operation illustrated in Fig. 7A.

In the embodiment and application examples described above, switching of the measurement range is not limited to two-step switching between the narrow range mode and the wide range mode, and may be switching between three or more modes. Alternatively, the switching may be stepless.

Industrial Applicability

The measuring device according to the embodiment of the present disclosure can be used, for example, for a ranging system mounted on a vehicle such as a car, an unmanned aerial vehicle (UAV) or an automated guided vehicle (AGV), or for vehicle detection.

Reference Signs List

10 object
20 light source
$20L_0$ laser light
$20L_1$ reference light
$20L_2$ irradiation light
$20L_3$ reflected light
$20L_4$ interference light
30 interference optical system
40 beam shaper
50 optical deflector
60 photodetector
70 processing circuit
72 memory
100 measuring device
200 vehicle

## Claims

1. A measuring device comprising:

a light source capable of emitting light for irradiating an object and changing a frequency of the light;
an interference optical system that separates the light into reference light and irradiation light, and generates interference light by causing interference between the reference light and reflected light generated by reflection of the irradiation light on the obj ect;
a photodetector that receives the interference light and outputs a signal corresponding to an intensity of the interference light; and
a processing circuit that controls the light source and generates and outputs data on a distance and/or velocity of the object based on the signal outputted from the photodetector, wherein
the processing circuit operates in a first mode and a second mode, causes the light source to emit light having a frequency that changes with time within a first frequency range in the first mode, and causes the light source to emit light having a frequency that changes with time within a second frequency range different from the first frequency range in the second mode,
an absolute value of a time rate of change in frequency in the first frequency range is different from an absolute value of a time rate of change in frequency in the second frequency range,
a center frequency of the first frequency range is different from a center frequency of the second frequency range, and
a lower limit of the first frequency range is different from a lower limit of the second frequency range.

2. The measuring device according to claim 1, wherein the frequency of the light in the first mode and the frequency of the light in the second mode periodically change with time, and a period of frequency change of the light in the first mode is equal to a period of frequency change of the light in the second mode.

3. The measuring device according to claim 1 or 2, wherein
the absolute value of the time rate of change in frequency in the first frequency range is higher than the absolute value of the time rate of change in frequency in the second frequency range, and the center frequency of the first frequency range is higher than the center frequency of the second frequency range.

4. The measuring device according to any one of claims 1 to 3, wherein

each period of frequency change of the light in the first mode includes a first up-chirp period in which the frequency monotonously increases from the lower limit to an upper limit of the first frequency range and a first down-chirp period in which the frequency monotonously decreases from the upper limit to the lower limit of the first frequency range, and
each period of frequency change of the light in the second mode includes a second up-chirp period in which the frequency monotonously increases from the lower limit to an upper limit of the second frequency range and a second down-chirp period in which the frequency monotonously decreases from the upper limit to the lower limit of the second frequency range.

5. The measuring device according to claim 4, wherein

in the first mode, the signal includes a first signal component corresponding to the intensity of the interference light based on the light in the first up-chirp period and a second signal component corresponding to the intensity of the interference light based on the light in the first down-chirp period,

in the second mode, the signal includes a third signal component corresponding to the intensity of the interference light based on the light in the second up-chirp period and a fourth signal component corresponding to the intensity of the interference light based on the light in the second down-chirp period,
the processing circuit generates and outputs the data on the distance and/or velocity of the object, based on the first and second signal components in the first mode, and generates and outputs the data on the distance and/or velocity of the object, based on the third and fourth signal components in the second mode.

**6.** The measuring device according to claim 4 or 5, wherein
a length of the first up-chirp period is equal to a length of the first down-chirp period, and a length of the second up-chirp period is equal to a length of the second down-chirp period.

**7.** The measuring device according to any one of claims 1 to 6, wherein
the processing circuit changes the frequency of the light in a triangular waveform in each of the first and second modes.

**8.** The measuring device according to any one of claims 1 to 7, wherein
operations in the first and second modes are switched according to a measurement range.

**9.** A computer program executed by a computer in a system including a measuring device, wherein

the measuring device includes
a light source capable of emitting light for irradiating an object and changing a frequency of the light, an interference optical system that separates the light into reference light and irradiation light, and generates interference light by causing interference between the reference light and reflected light generated by reflection of the irradiation light on the object, and a photodetector that receives the interference light and outputs a signal corresponding to an intensity of the interference light,
the computer program causing the computer to execute
causing the light source to emit light having a frequency that changes with time within a first frequency range in the first mode,
causing the light source to emit light having a frequency that changes with time within a second frequency range in the second mode, and
generating and outputting data on a distance and/or velocity of the object, based on the signal outputted from the photodetector in each of the first and second modes, wherein
an absolute value of a time rate of change in frequency in the first frequency range is different from an absolute value of a time rate of change in frequency in the second frequency range,
a center frequency of the first frequency range is different from a center frequency of the second frequency range, and
a lower limit of the first frequency range is different from a lower limit of the second frequency range.

**10.** A method executed by a computer in a system including a measuring device, wherein

the measuring device includes
a light source capable of emitting light for irradiating an object and changing a frequency of the light, an interference optical system that separates the light into reference light and irradiation light, and generates interference light by causing interference between the reference light and reflected light generated by reflection of the irradiation light on the object, and a photodetector that receives the interference light and outputs a signal corresponding to an intensity of the interference light,
the method comprising the steps of:

causing the light source to emit light having a frequency that changes with time within a first frequency range in the first mode,
causing the light source to emit light having a frequency that changes with time within a second frequency range in the second mode, and
generating and outputting data on a distance and/or velocity of the object, based on the signal outputted from the photodetector in each of the first and second modes, wherein
an absolute value of a time rate of change in frequency in the first frequency range is different from an absolute value of a time rate of change in frequency in the second frequency range,
a center frequency of the first frequency range is different from a center frequency of the second frequency range, and
a lower limit of the first frequency range is different from a lower limit of the second frequency range.

FIG. 1

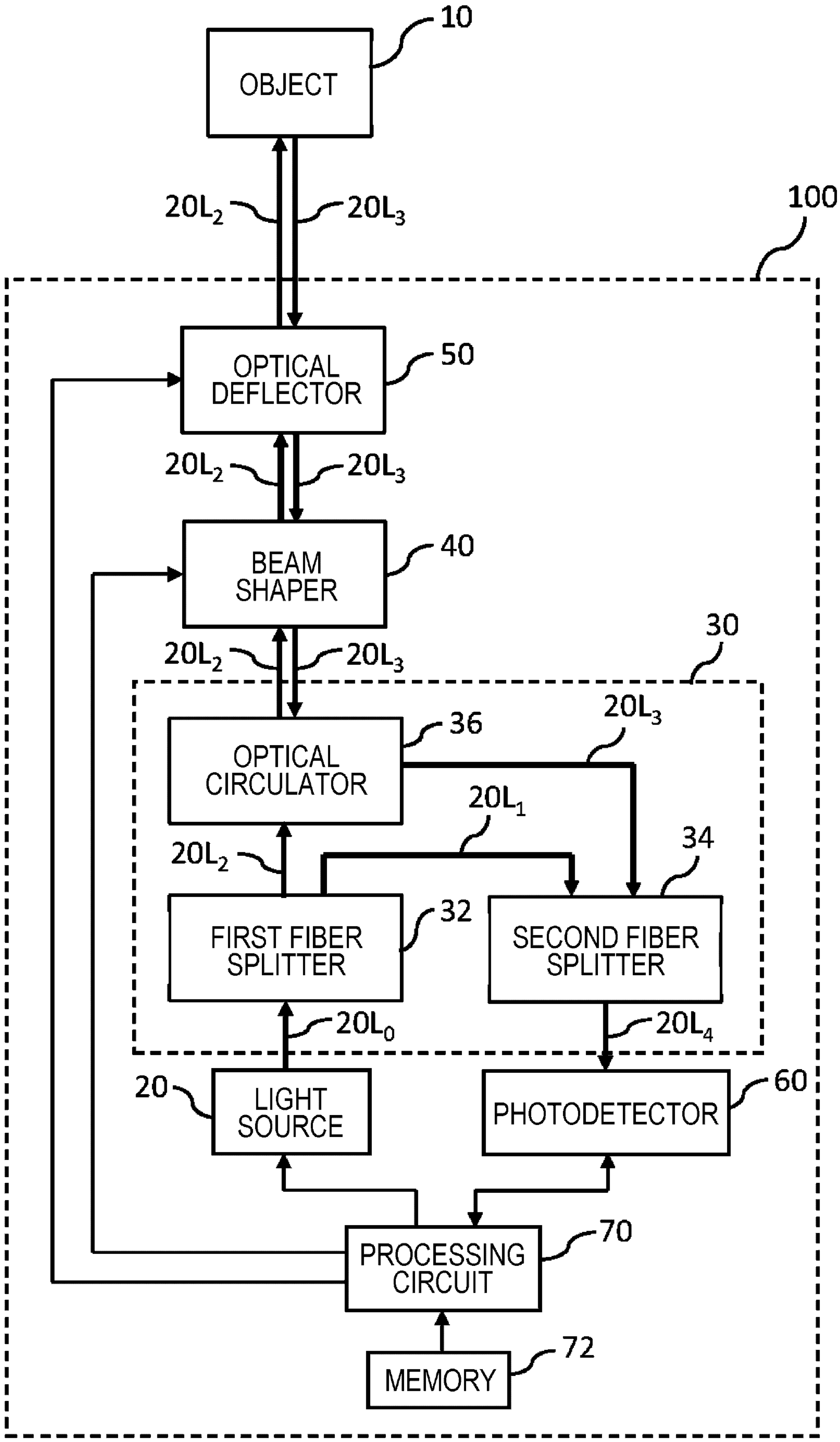
10
OBJECT
100
20L2
20L3
OPTICAL DEFLECTOR
50
BEAM SHAPER
40
30
36
OPTICAL CIRCULATOR
20L1
34
32
FIRST FIBER SPLITTER
SECOND FIBER SPLITTER
20L0
20L4
20
LIGHT SOURCE
PHOTODETECTOR
60
PROCESSING CIRCUIT
70
MEMORY
72

FIG. 2A

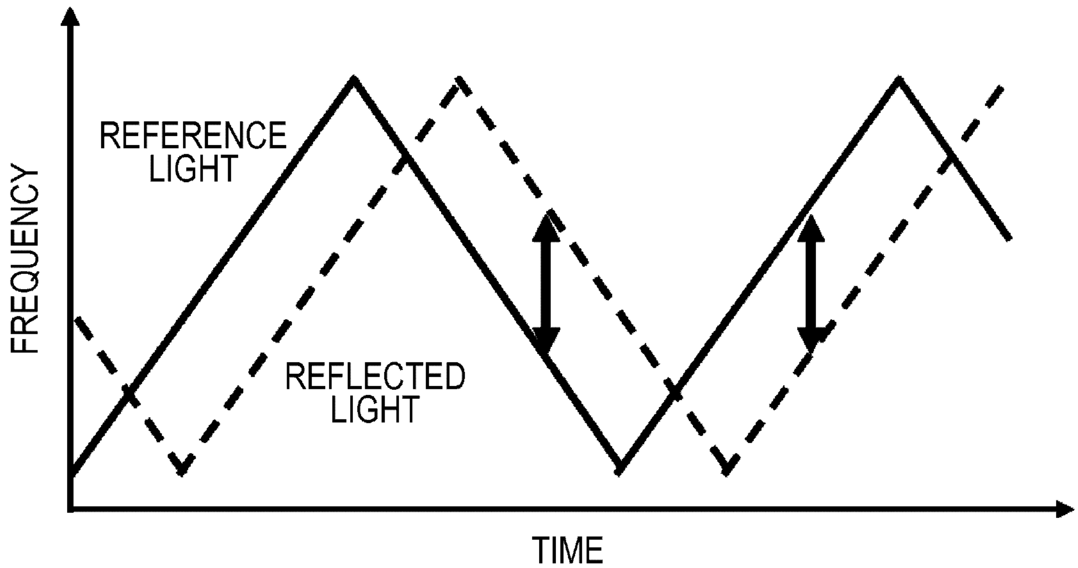
REFERENCE LIGHT
REFLECTED LIGHT
FREQUENCY
TIME

FIG. 2B

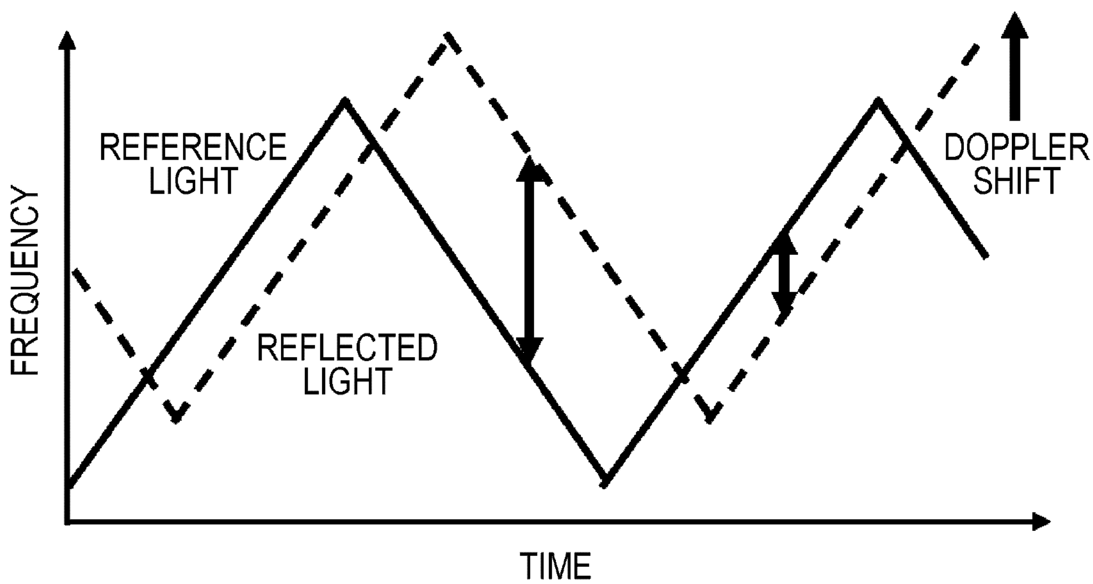
REFERENCE LIGHT
REFLECTED LIGHT
DOPPLER SHIFT
FREQUENCY
TIME

FIG. 3

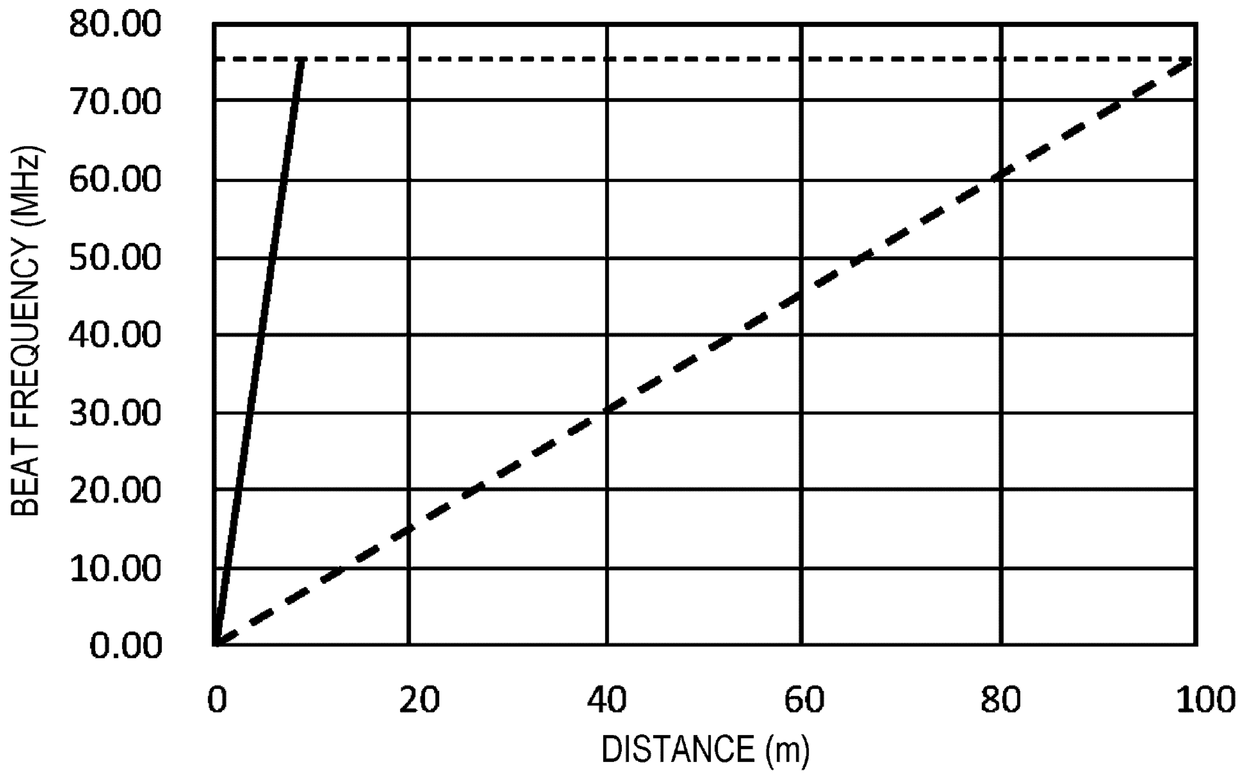
80.00
70.00
60.00
50.00
40.00
30.00
20.00
10.00
0.00
BEAT FREQUENCY (MHz)
0
20
40
60
80
100
DISTANCE (m)

FIG. 4

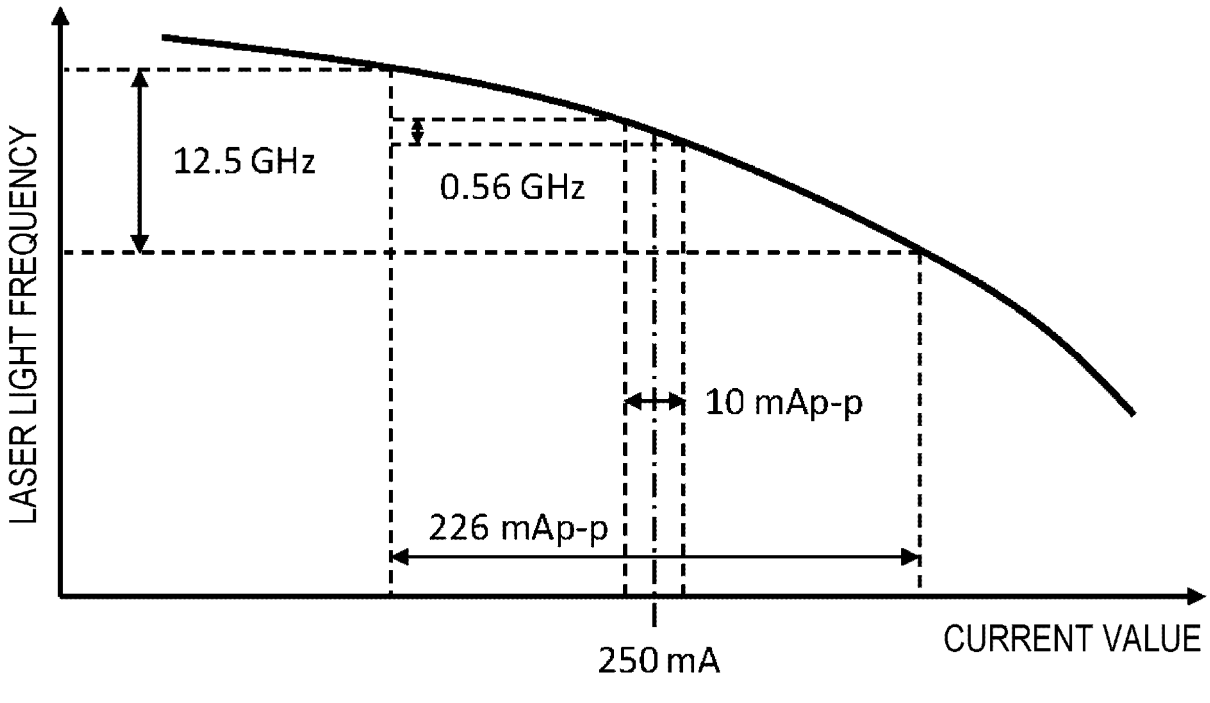
LASER LIGHT FREQUENCY
12.5 GHz
0.56 GHz
10 mAp-p
226 mAp-p
250 mA
CURRENT VALUE

FIG. 5

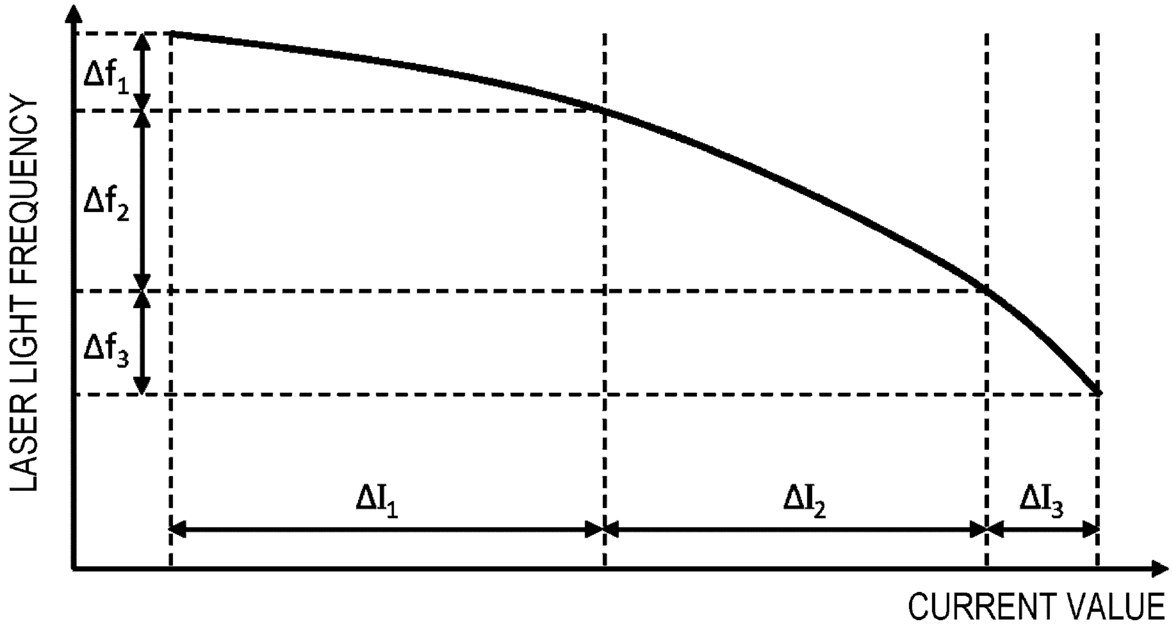
LASER LIGHT FREQUENCY
Δf1
Δf2
Δf3
ΔI1
ΔI2
ΔI3
CURRENT VALUE

FIG. 6A

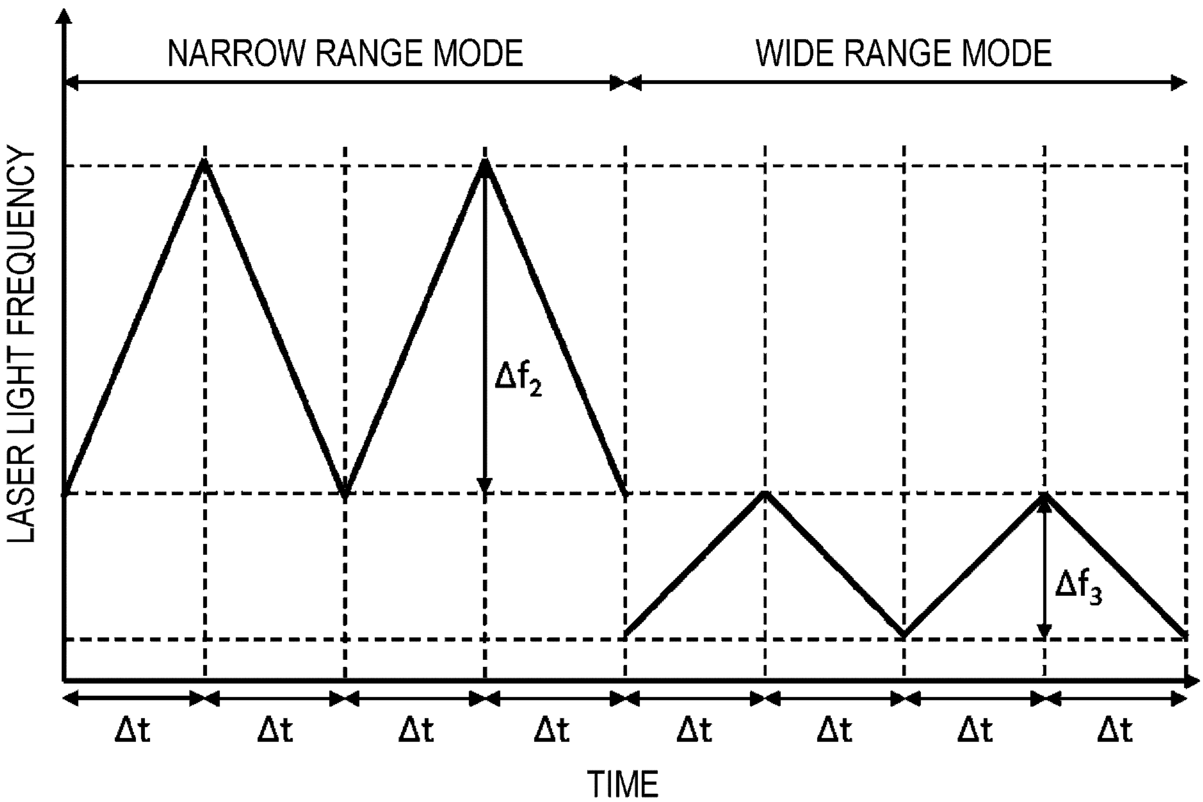
NARROW RANGE MODE
WIDE RANGE MODE
LASER LIGHT FREQUENCY
Δf2
Δf3
Δt
Δt
Δt
Δt
Δt
Δt
Δt
Δt
TIME

FIG. 6B

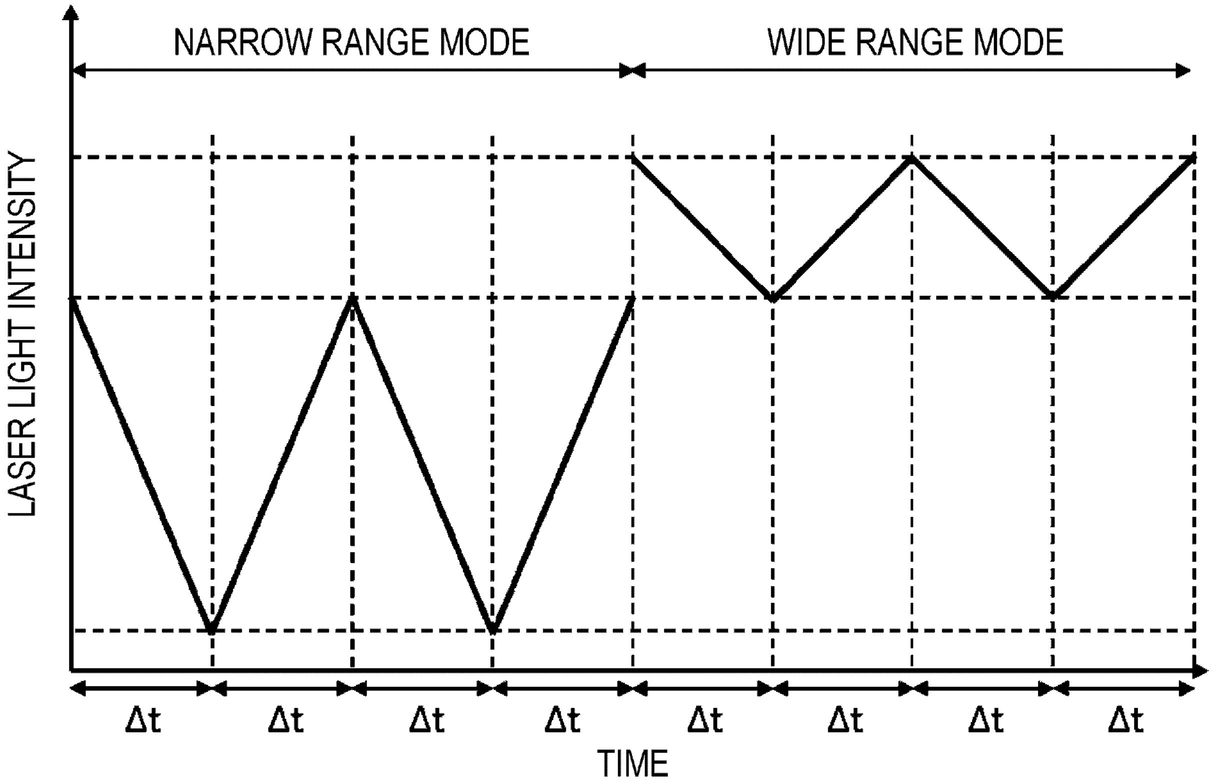
NARROW RANGE MODE
WIDE RANGE MODE
LASER LIGHT INTENSITY
Δt
Δt
Δt
Δt
Δt
Δt
Δt
Δt
TIME

FIG. 7A

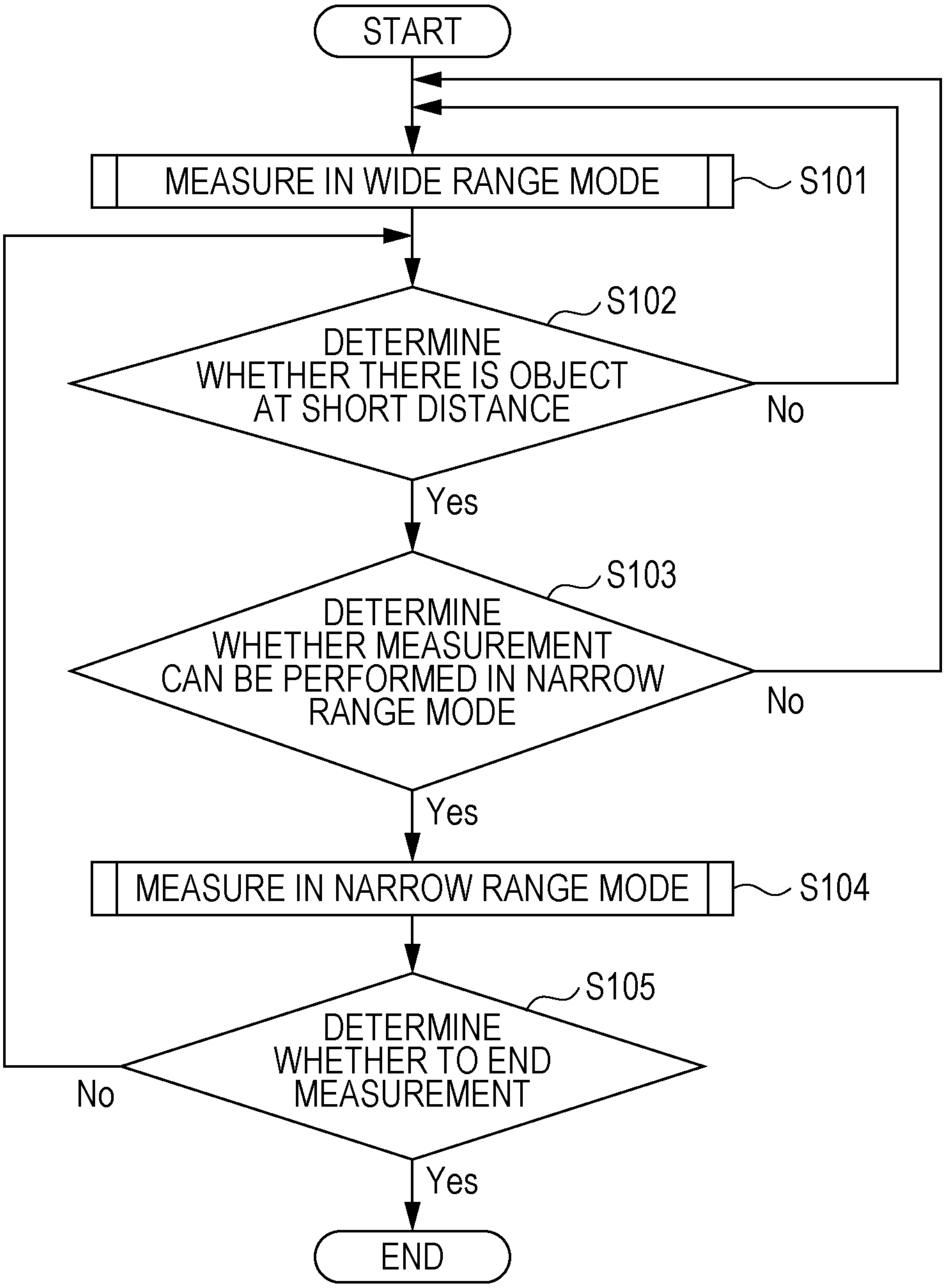
START
MEASURE IN WIDE RANGE MODE
S101
S102
DETERMINE WHETHER THERE IS OBJECT AT SHORT DISTANCE
No
Yes
S103
DETERMINE WHETHER MEASUREMENT CAN BE PERFORMED IN NARROW RANGE MODE
No
Yes
MEASURE IN NARROW RANGE MODE
S104
S105
DETERMINE WHETHER TO END MEASUREMENT
No
Yes
END

FIG. 7B

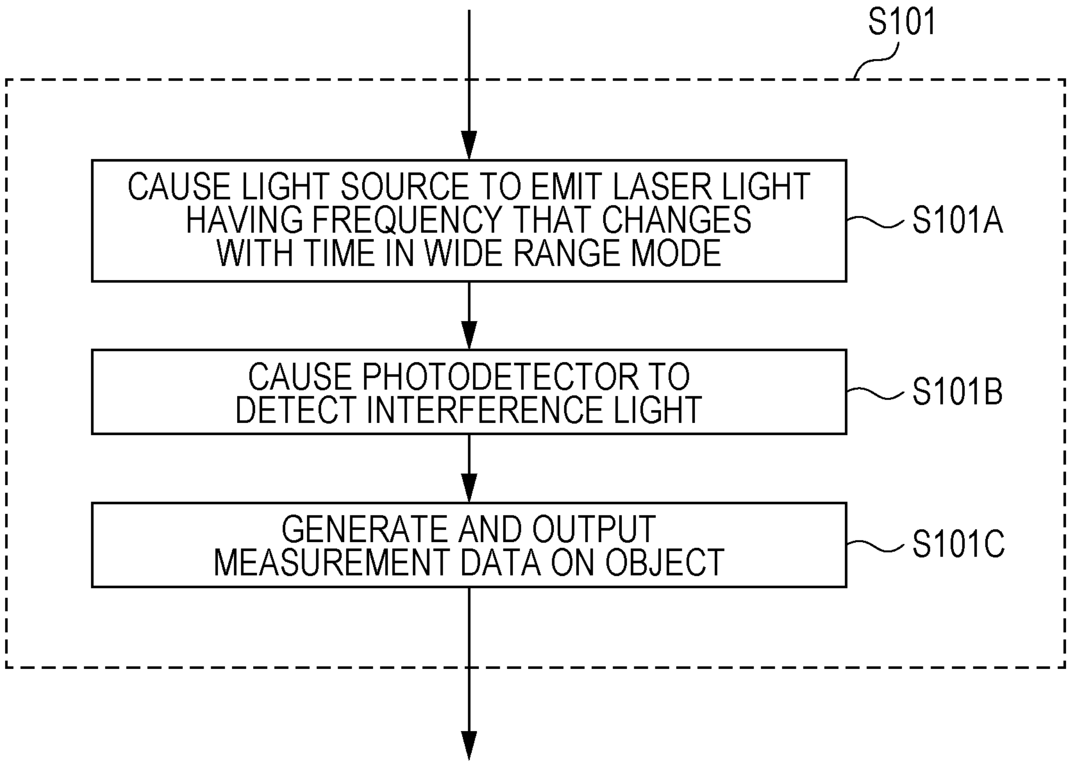
S101
CAUSE LIGHT SOURCE TO EMIT LASER LIGHT HAVING FREQUENCY THAT CHANGES WITH TIME IN WIDE RANGE MODE
S101A
CAUSE PHOTODETECTOR TO DETECT INTERFERENCE LIGHT
S101B
GENERATE AND OUTPUT MEASUREMENT DATA ON OBJECT
S101C

FIG. 7C

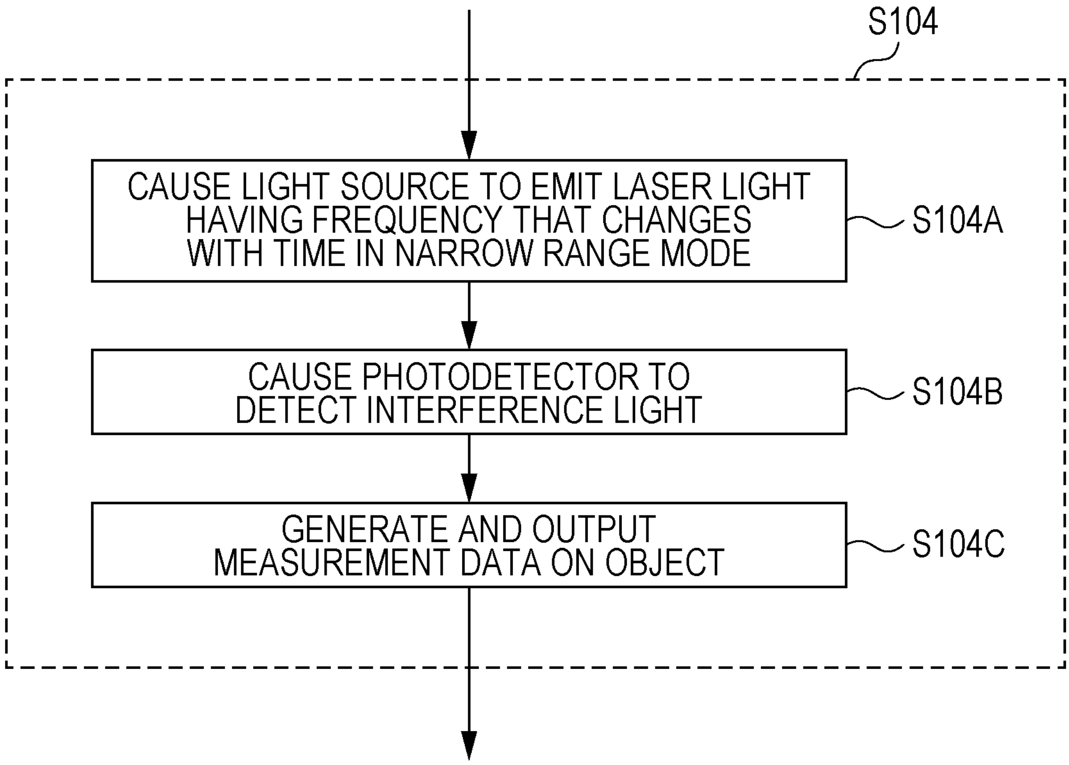
S104
CAUSE LIGHT SOURCE TO EMIT LASER LIGHT HAVING FREQUENCY THAT CHANGES WITH TIME IN NARROW RANGE MODE
S104A
CAUSE PHOTODETECTOR TO DETECT INTERFERENCE LIGHT
S104B
GENERATE AND OUTPUT MEASUREMENT DATA ON OBJECT
S104C

FIG. 8

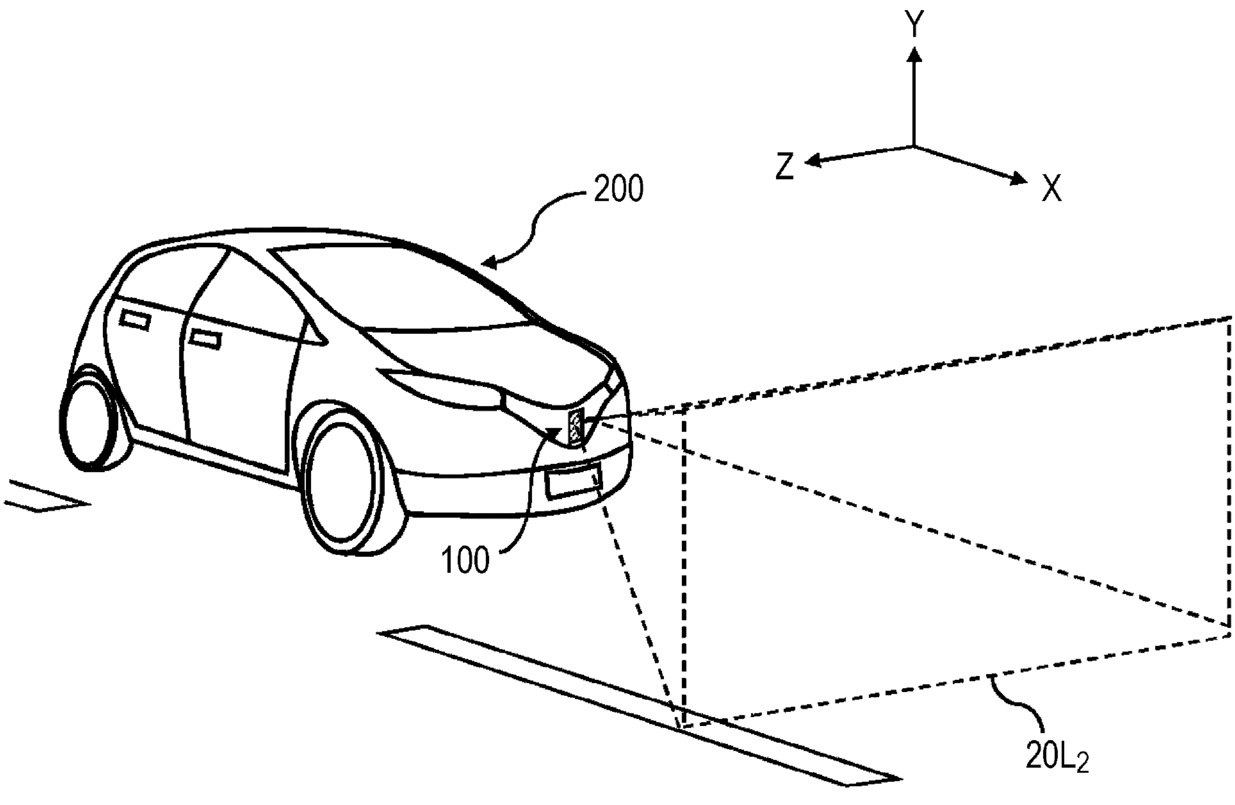

FIG. 9A

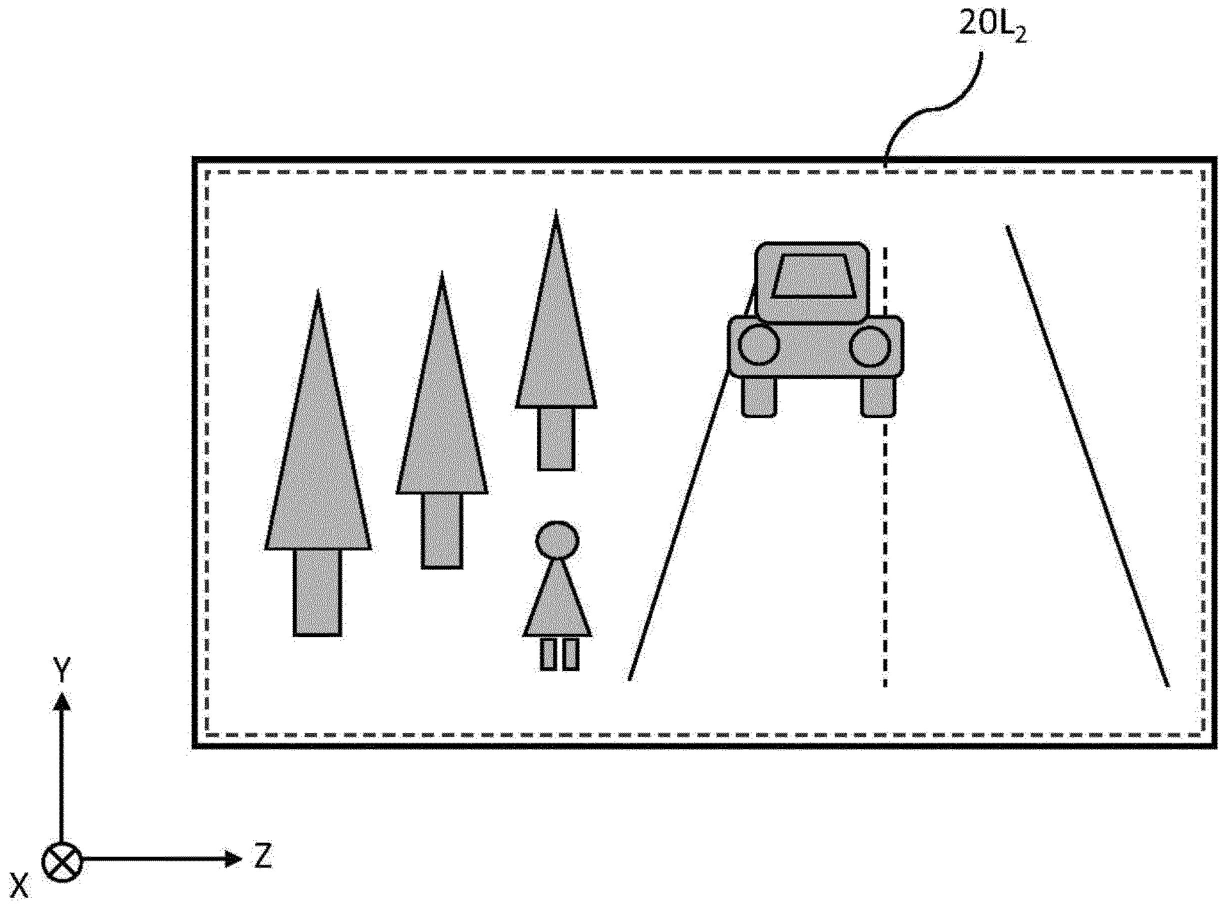


FIG. 9B

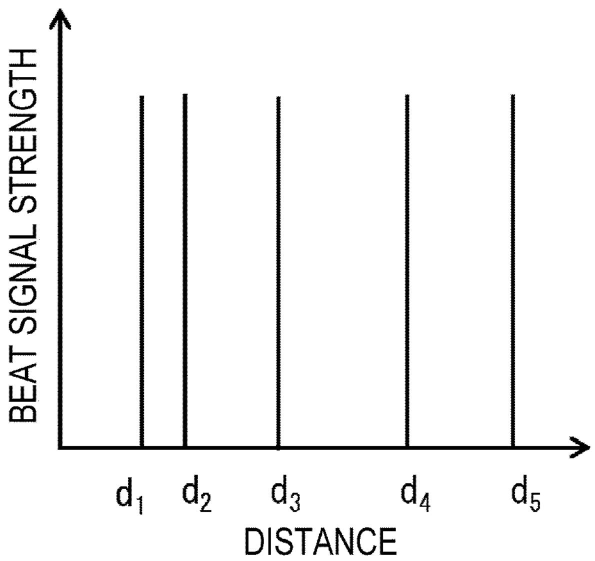

FIG. 10A

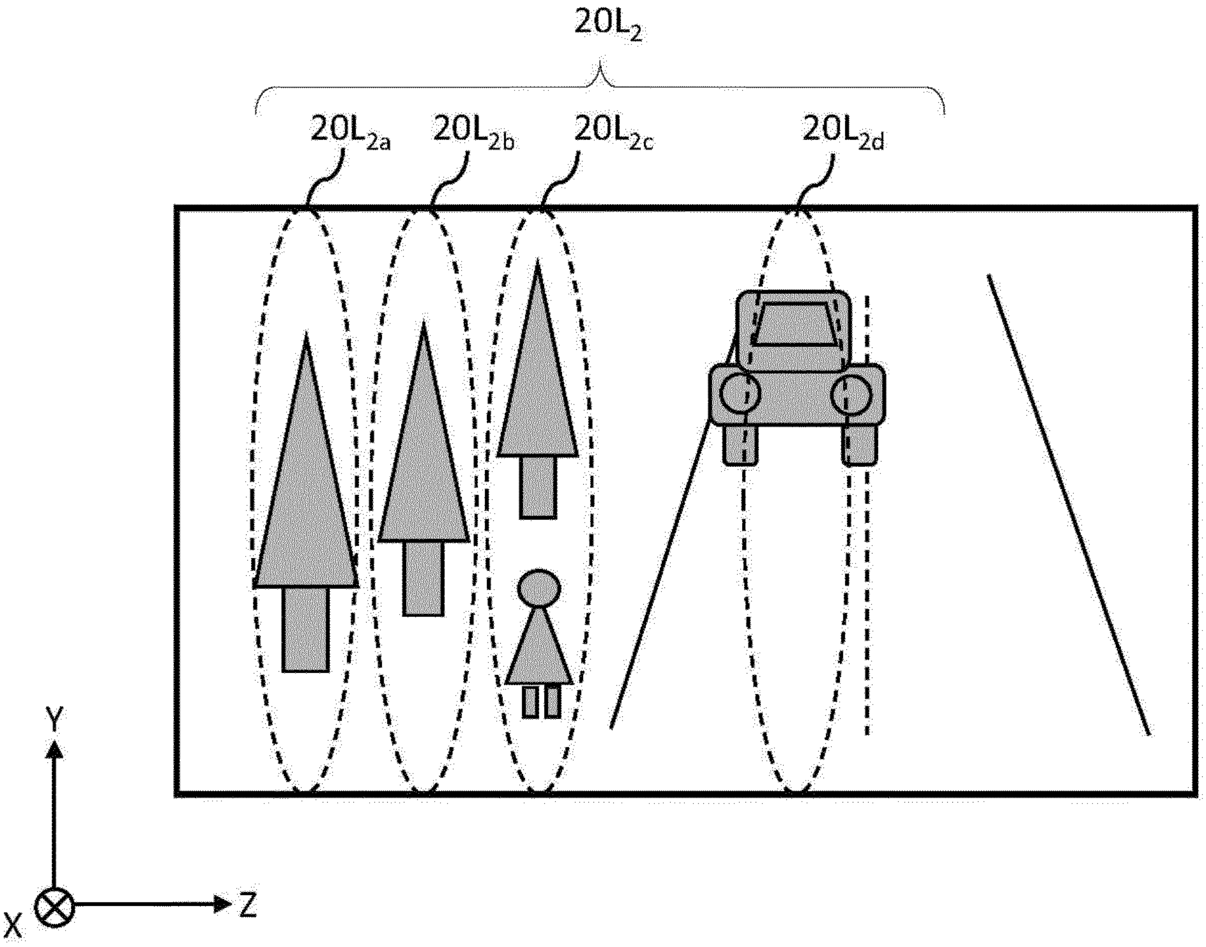


FIG. 10B

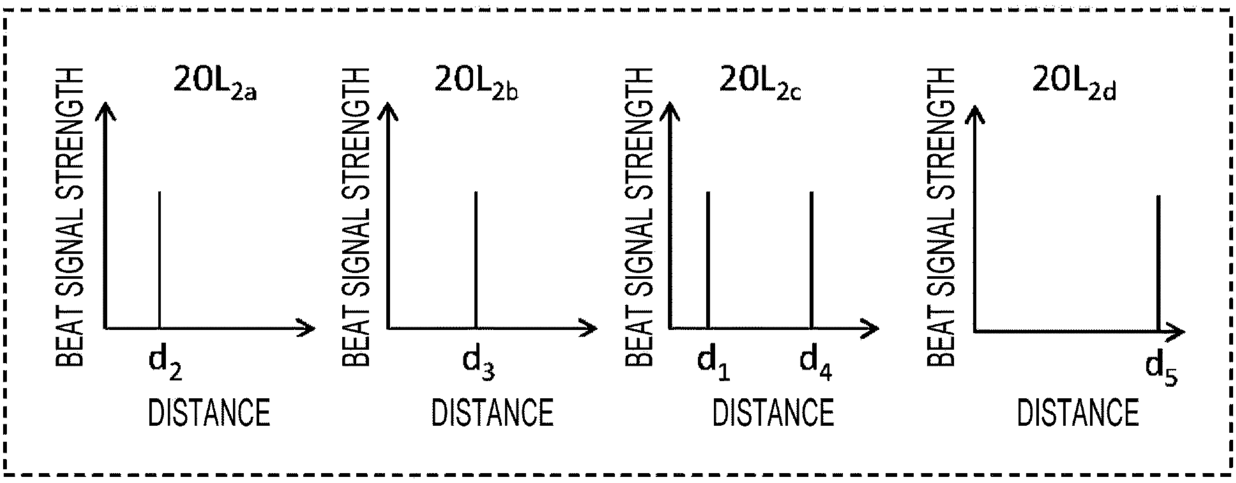

FIG. 11A

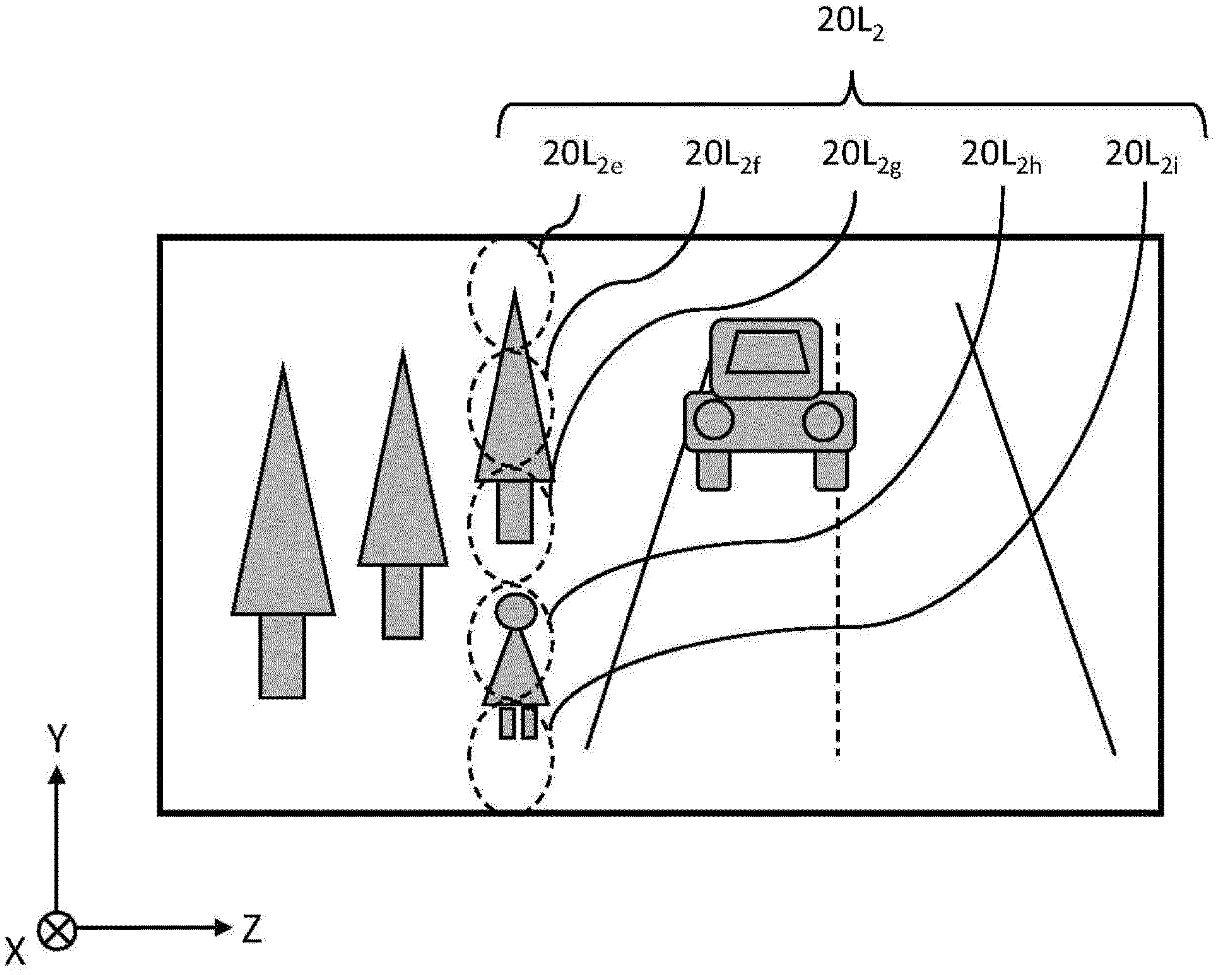


FIG. 11B

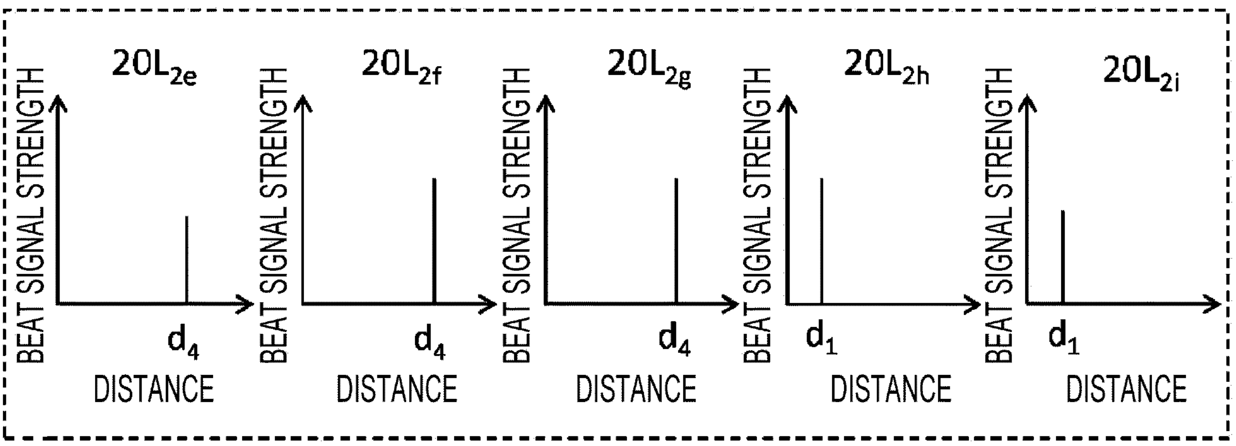

FIG. 12

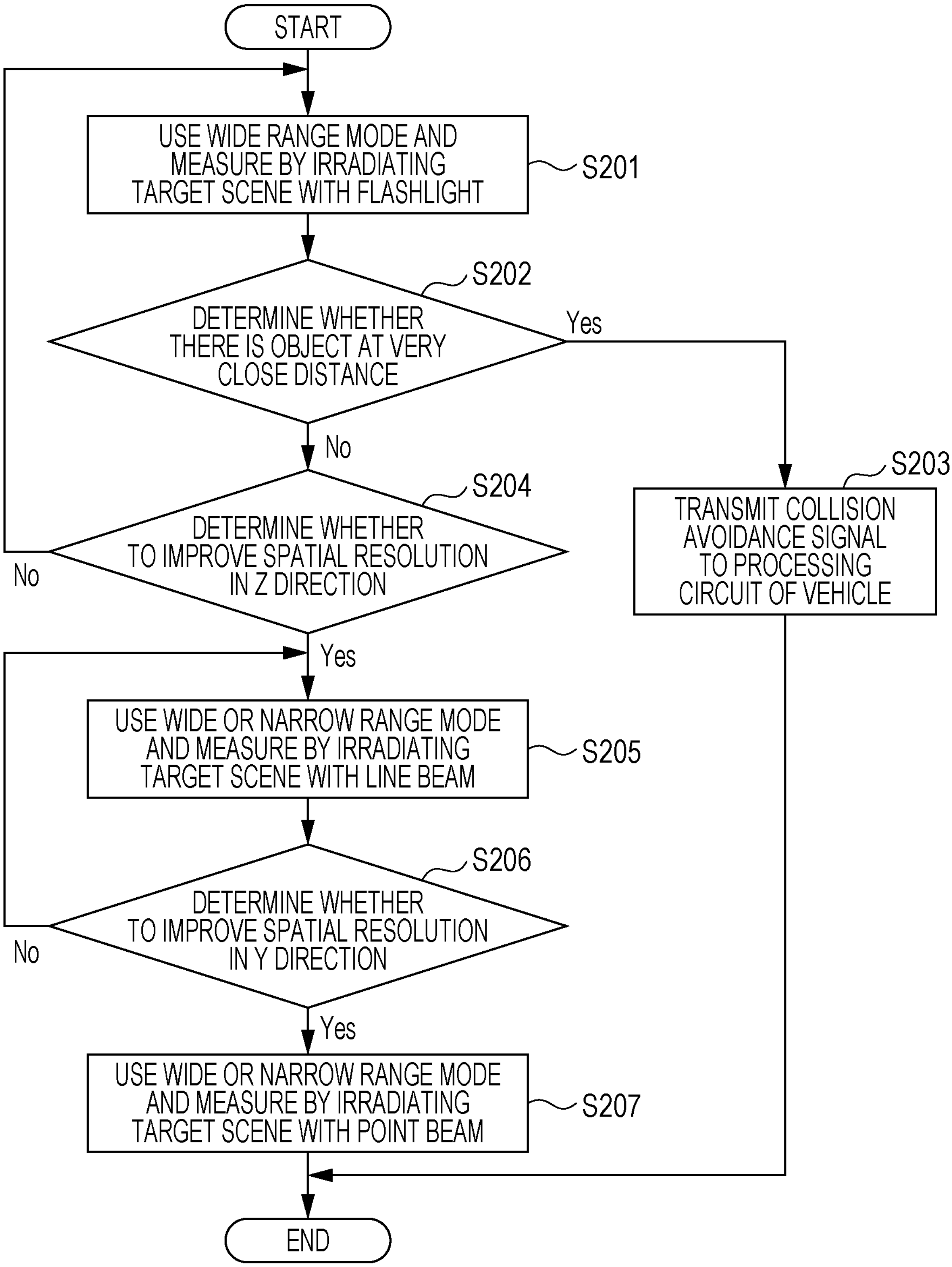
START
USE WIDE RANGE MODE AND MEASURE BY IRRADIATING TARGET SCENE WITH FLASHLIGHT
S201
DETERMINE WHETHER THERE IS OBJECT AT VERY CLOSE DISTANCE
S202
Yes
No
S203
TRANSMIT COLLISION AVOIDANCE SIGNAL TO PROCESSING CIRCUIT OF VEHICLE
DETERMINE WHETHER TO IMPROVE SPATIAL RESOLUTION IN Z DIRECTION
S204
No
Yes
USE WIDE OR NARROW RANGE MODE AND MEASURE BY IRRADIATING TARGET SCENE WITH LINE BEAM
S205
DETERMINE WHETHER TO IMPROVE SPATIAL RESOLUTION IN Y DIRECTION
S206
No
Yes
USE WIDE OR NARROW RANGE MODE AND MEASURE BY IRRADIATING TARGET SCENE WITH POINT BEAM
S207
END

FIG. 13

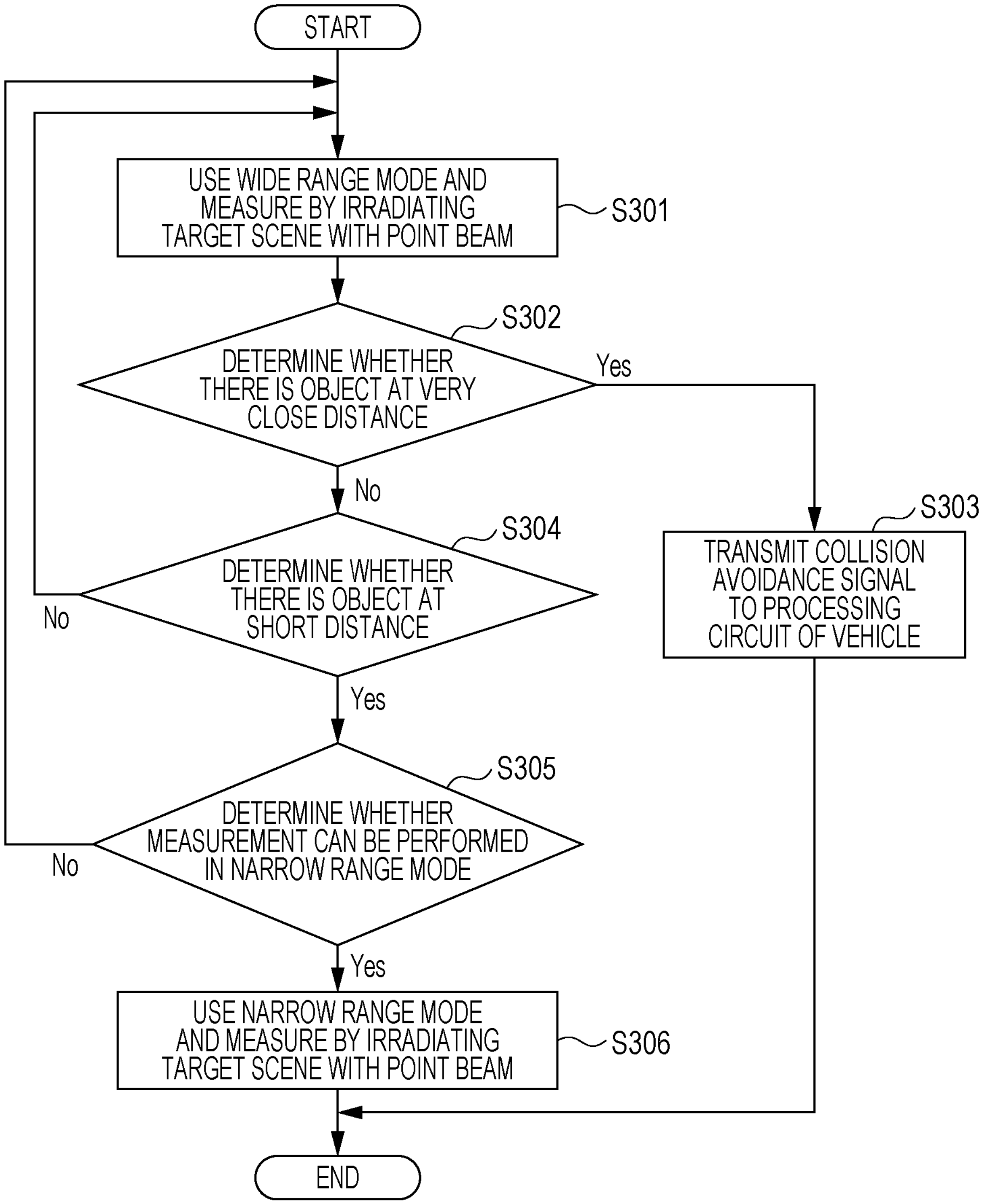
START
USE WIDE RANGE MODE AND MEASURE BY IRRADIATING TARGET SCENE WITH POINT BEAM
S301
S302
DETERMINE WHETHER THERE IS OBJECT AT VERY CLOSE DISTANCE
Yes
No
S303
TRANSMIT COLLISION AVOIDANCE SIGNAL TO PROCESSING CIRCUIT OF VEHICLE
S304
DETERMINE WHETHER THERE IS OBJECT AT SHORT DISTANCE
No
Yes
S305
DETERMINE WHETHER MEASUREMENT CAN BE PERFORMED IN NARROW RANGE MODE
No
Yes
USE NARROW RANGE MODE AND MEASURE BY IRRADIATING TARGET SCENE WITH POINT BEAM
S306
END

FIG. 14A

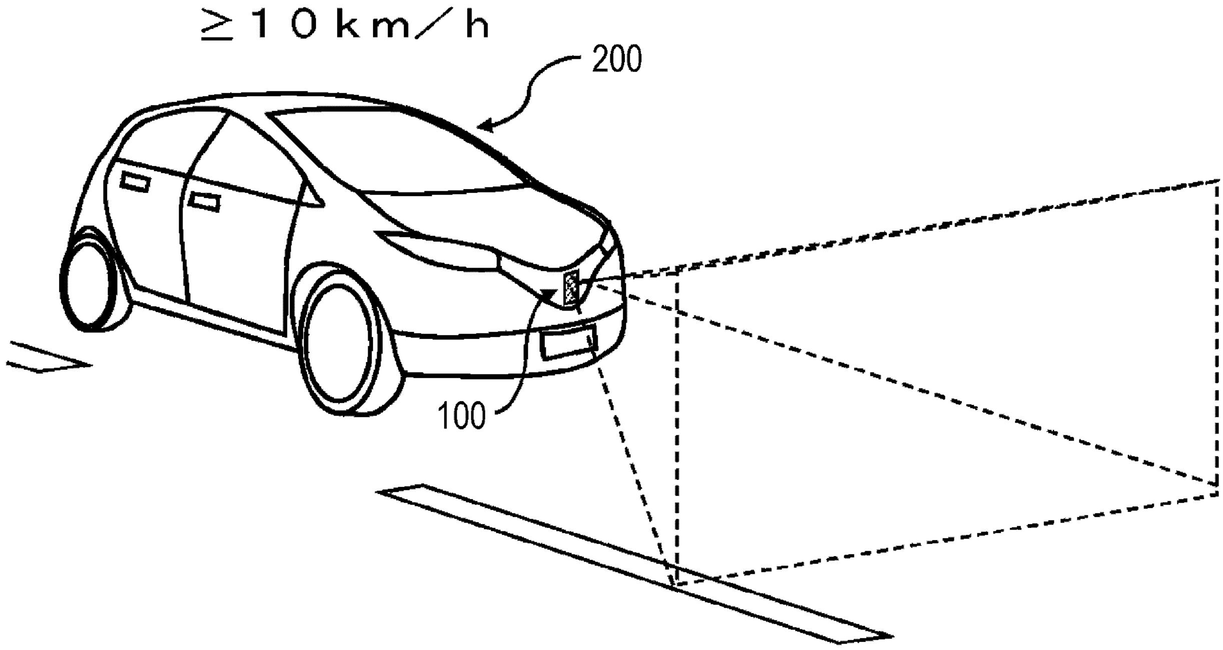


FIG. 14B

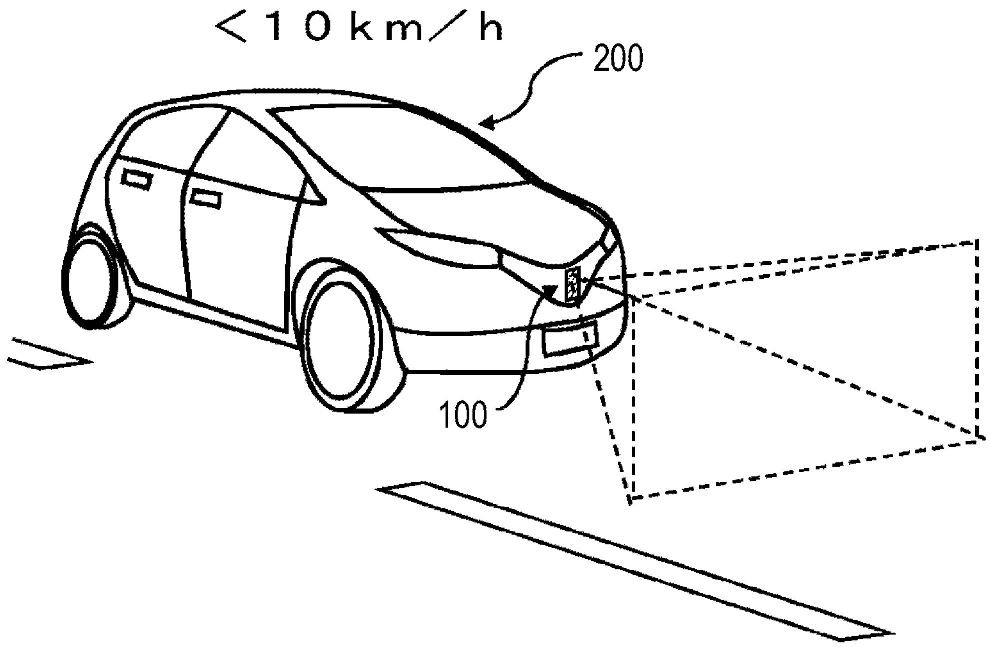

FIG. 15A

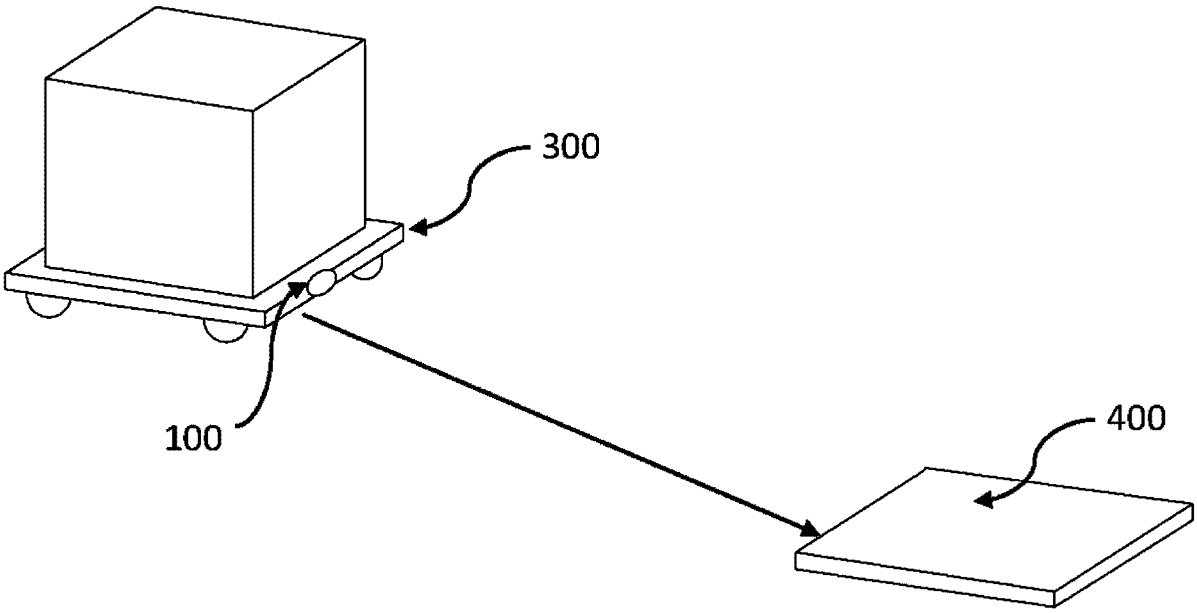


FIG. 15B

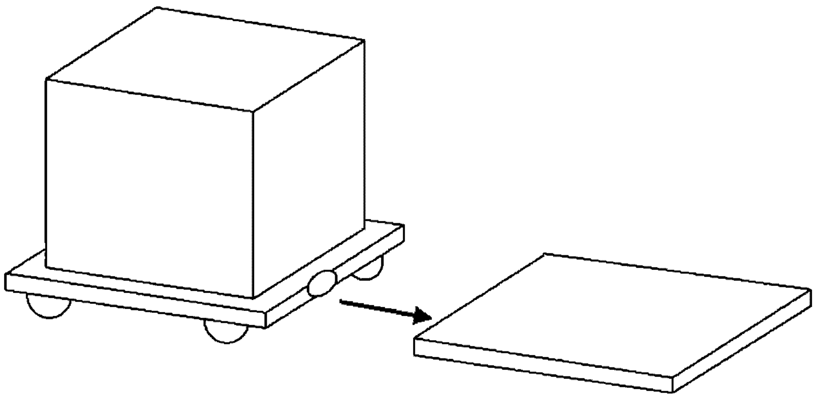

FIG. 16A

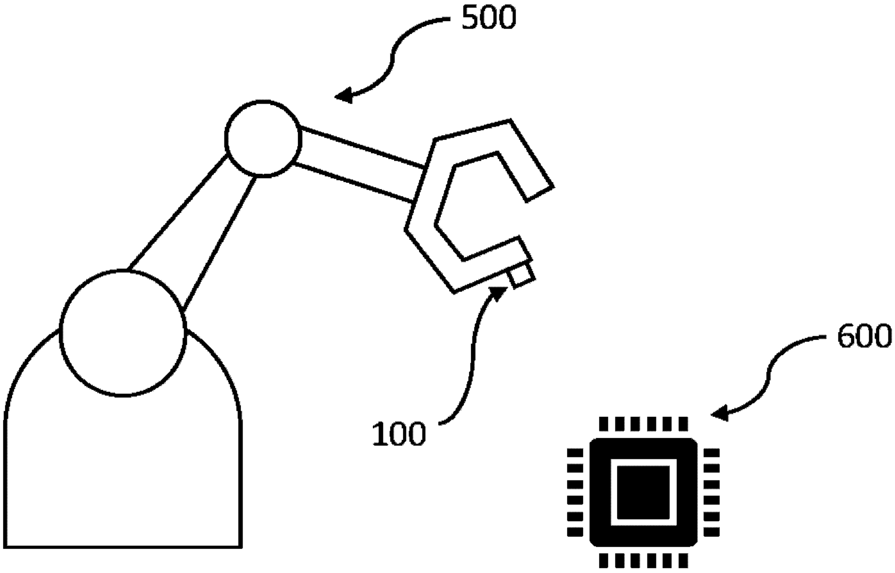


FIG. 16B

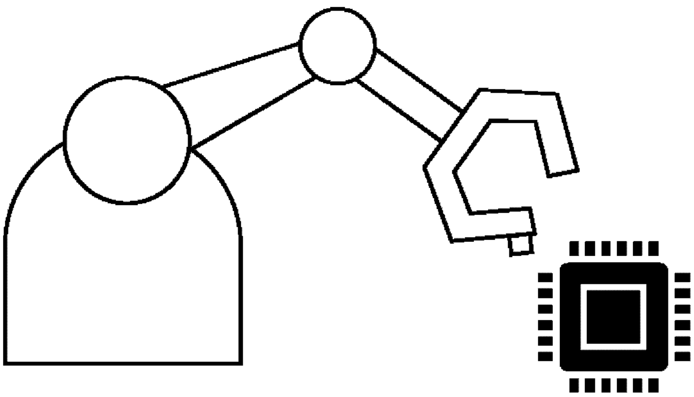

**INTERNATIONAL SEARCH REPORT**

International application No. **PCT/JP2022/004779**

**A. CLASSIFICATION OF SUBJECT MATTER**

***G01S 17/34***(2020.01)i; ***G01S 17/931***(2020.01)i
FI: G01S17/34; G01S17/931

According to International Patent Classification (IPC) or to both national classification and IPC

**B. FIELDS SEARCHED**

Minimum documentation searched (classification system followed by classification symbols)

G01S 7/48 - 7/51, G01S17/00 - 17/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2019/0064358 A1 (MEZMERIZ INC.) 28 February 2019 (2019-02-28) paragraphs [0008]-[0014], [0021]-[0040] (in particular, paragraph [0031]) | 1-10 |
| A | JP 7-139907 A (SHARP CORP) 02 June 1995 (1995-06-02) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/004779**

| Patent document cited in search report | Publication date (day/month/year) | Patent family member(s) | Publication date (day/month/year) |
|---|---|---|---|
| US 2019/0064358 A1 | 28 February 2019 | WO 2019/040700 A1 | |
| JP 7-139907 A | 02 June 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190310372
- JP 2002071792 A
- JP 8005733 A
- JP 2013321508 W
- WO 2019130720 A


### Non-patent literature cited in the description


- **CHRISTOPHER V. POULTON et al.** Frequency-modulated Continuous-wave LIDAR Module in Silicon Photonics. *OFC2016, W4E.3,* 2016